# EUROPÄISCHE PATENTSCHRIFT

(11) **EP 1 149 118 B1**
(45) Veröffentlichungstag und Bekanntmachung des Hinweises auf die Patenterteilung: **27.12.2006**
(21) Anmeldenummer: 99959351.0
(22) Anmeldetag: 26.11.1999
(51) Int. Cl.: C08F 8/30, C08F 8/34, C08G 85/00

(54) **VERFAHREN ZUR HERSTELLUNG DERIVATISIERTER POLYMERE**
METHOD OF PRODUCING DERIVATIZED POLYMERS
PROCEDE DE PREPARATION DE POLYMERES DERIVES

(30) Priorität: 30.11.1998 DE 19855173
(43) Veröffentlichungstag der Anmeldung: 31.10.2001
(73) Patentinhaber: instrAction GmbH, 67059 Ludwigshafen (DE)
(72) Erfinder: GOTTSCHALL, Klaus, D-68542 Heddesheim (DE)
(74) Vertreter: Ricker, Mathias
(86) Internationale Anmeldenummer: PCT/EP1999/009200
(87) Internationale Veröffentlichungsnummer: WO 2000/032649

(56) Entgegenhaltungen:
- EP-A- 0 591 807
- EP-A- 0 698 620
- EP-A- 0 700 933
- CH-A- 606 196
- DE-A- 4 341 524
- FR-A- 2 382 489
- FR-A- 2 526 028
- US-A- 4 076 916
- US-A- 5 582 955

## Beschreibung

Die vorliegende Erfindung betrifft ein Verfahren zur Herstellung von Derivaten von funktionelle Gruppen aufweisenden Polymeren mittels Aktivierungsreagenzien, die Verwendung solcher Aktivierungsreagenzien zur Herstellung der derivatisierten Polymere sowie die Verwendung dieser Polymere als Rezeptoren zur Substratbindung.

Polymere, die mit definierten Resten derivatisiert sind, eignen sich für verschiedenste chemische Applikationen und technische Anwendungen. Dementsprechend besteht ein hoher Bedarf gerade an solchen Polymeren, die mit Resten derivatisiert sind, die maßgeschneidert für entsprechende Einsatzbereiche sind.

Von großem Wert ist daher ein breit und variabel einsetzbares Verfahren zur Umsetzung von Polymeren, die funktionelle Gruppen tragen, mit bereits passend konfigurierten Reagenzien, die vor der Umsetzung schon zielgerichtet im Hinblick auf den späteren Einsatzbereich entworfen wurden. Mit einem solchen rationalen Polymerdesign ist es dann möglich, Polymere in einfacher Art und Weise mit erforderlichen und wünschenswerten Eigenschaften herzustellen, d.h. maßzuschneidern.

Von besonderer Bedeutung sind solche derivatisierten Polymere, bei denen spezifische Wechselwirkungen zwischen den über die Derivatisierung eingeführten Resten und Substraten, die mit den Polymerderivaten in Kontakt gebracht werden, erreicht werden können. Über den Weg des rationalen Polymerdesigns könnten selektive, ja sogar spezifische, schon vor der Polymerderivatisierung planbare Wechselwirkungen zwischen der Rezeptorgruppe, d.h. z.B. zwischen dem (den) in das Polymer über die Derivatisierung eingeführten Rest(en) oder einem Teil dieses (dieser) Restes (Reste), und dem Substrat erreicht werden.

Um Polymere, die funktionelle Gruppen aufweisen, mit solchen Rezeptorgruppen auszustatten, wurden in der Regel bislang nur drei Wege eingeschlagen, die in M. Antonietti, S. Heinz, Nachr. Chem. Tech. Lab. 40 (1992) Nr. 3, S. 308 - 314 aufgeführt sind. Gemäß dieser Schrift sind solche derivatisierten Polymere über statistische Polymerisation bzw. Copolymerisation, über die Herstellung von Block-Copolymeren und über die Herstellung von oberflächenfunktionalisierten Polymerpartikeln erhältlich. Diese Herstellungswege gehen von derivatisierten Monomeren aus, aus denen das Polymer erhalten wird. Für viele Anwendungsbereiche, d.h. z.B. für viele angestrebte Polymerderivat-Substrat-Wechselwirkungen, können diese derivatisierten Monomere jedoch nicht oder nur mit einem technisch und wirtschaftlich inakzeptablen Aufwand hergestellt werden.

Eine weitere Möglichkeit, Polymere zu derivatisieren, stellt die polymeranaloge Umsetzung von funktionelle Gruppen aufweisenden Polymeren mit Derivatisierungsverbindungen dar. In diesen Fällen war es aber bisher nicht oder nur unter überaus großen Schwierigkeiten möglich, durch Umsetzung von beispielsweise polaren, funktionelle Gruppen aufweisenden Polymeren für die Anwendung interessante Reste derart in die Polymere einzuführen, daß lösliche Derivate entstehen, die in eventuell anschließenden Verfahren entsprechend einfach weiterzuverarbeiten sind.

Wegen der andersartigen Zielsetzung fanden Polymerderivatisierungen bisher beispielsweise an festen Oberflächen statt, d.h. die Umsetzungen erfolgten heterogen. Zu dieser Gruppe zählen unter anderem die Trägeraktivierung und Trägerimmobilisierung, bei denen üblicherweise eine nucleophile Substanz heterogen an ein Polymer, wie z.B. Epoxy-Polyacrylester oder BrCN-Sepharose gebunden wird (siehe dazu P. Mohr, M. Holtzhauer, G. Kaiser, Immunosorption Techniques, Fundamentals and Applications, Akademie Verlag, Berlin (1992), S. 34-40).

Eine Aufgabe der vorliegenden Erfindung war es daher, ein Verfahren bereitzustellen, mit dem es möglich ist, in homogener Phase funktionelle Gruppen aufweisende Polymere in einfacher Art und Weise zu derivatisieren.

Die Erfindung betrifft ein Verfahren zur Herstellung eines Derivates eines mindestens eine funktionelle Gruppe aufweisenden Polymers, dadurch gekennzeichnet, dass das Verfahren die folgenden Schritte (i) oder (ii) umfasst:
(i) Umsetzung des mindestens eine funktionelle Gruppe aufweisenden Polymers mit mindestens einem Aktivierungsreagens und Umsetzung des erhaltenen Polymers mit einem Derivatisierungsreagens, wobei das Aktivierungsreagens mit der funktionellen Gruppe unter Bildung eines Polymers reagiert, das eine aktivierte funktionelle Gruppe besitzt, und Umsetzung der aktivierten funktionellen Gruppe des Polymers mit einem Derivatisierungsreagens unter Bildung des derivatisierten Polymers,
(ii) Umsetzung des mindestens eine funktionelle Gruppe aufweisenden Polymers mit mindestens einem Derivat eines Aktivierungsreagens, wobei das Derivat des Aktivierungsreagens mit der funktionellen Gruppe unter Bildung des derivatisierten Polymers reagiert,
wobei die Umsetzungen in (i) und (ii) in homogener Phase durchgeführt werden, und sich das Aktivierungsreagens von einer Verbindung der folgenden Struktur (I) ableitet, 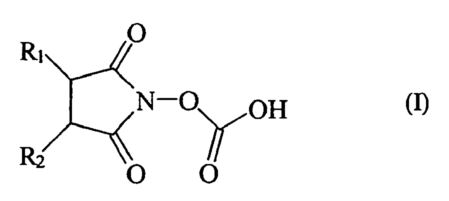 wobei R₁ und R₂ gleich oder unterschiedlich sind und geradkettig, verzweigtkettig oder zu einem Carbozyklus oder einem Heterozyklus verbrückt sein können und so gewählt sind, daß das Aktivierungsreagens oder das Derivat des Aktivierungsreagens mit dem mindestens eine funktionelle Gruppe aufweisenden Polymer in homogener Phase umgesetzt werden kann.

Im Rahmen des erfindungsgemäßen Verfahrens ist es möglich, in homogener Phase das mindestens eine funktionelle Gruppe aufweisende Polymer zunächst mit einem Aktivierungsreagens umzusetzen.

Ebenso ist es im erfindungsgemäßen Verfahren natürlich auch denkbar, das mindestens eine funktionelle Gruppe aufweisende Polymer mit einem Gemisch aus zwei oder mehr geeigneten Aktivierungsreagenzien umzusetzen. Diese können gleichzeitig mit dem Polymer umgesetzt werden. Ebenso können die zwei oder mehr Aktivierungsreagenzien auch nacheinander mit dem Polymer umgesetzt werden.

Wenn das Polymer an mindestens zwei funktionellen Gruppen mit jeweils verschiedenen Aktivierungsreagenzien, wie oben beschrieben, umgesetzt wird, können, je nach Wahl der Aktivierungsreagenzien, die aktivierten Gruppen gleiche oder auch unterschiedliche Reaktivität aufweisen.

Die Umsetzung findet hierbei vorzugsweise in flüssiger Phase statt. Es kann daher erforderlich sein, daß das umzusetzende Polymer vor der Umsetzung in einem geeigneten Lösungsmittel oder Lösungsmittelgemisch gelöst wird. Im Falle, daß das mindestens eine funktionelle Gruppe aufweisende Polymer flüssig ist, können, sollte dies erforderlich sein, ebenfalls ein Lösungsmittel oder ein Lösungsmittelgemisch zugegeben werden.

Vorzugsweise wird das Lösungsmittel oder Lösungsmittelgemisch so gewählt, daß das Aktivierungsreagens, sollte dieses an sich in fester Form vorliegen, ebenfalls darin gelöst werden kann. Dabei kann das Aktivierungsreagens, sollte dieses an sich in fester Form vorliegen, vor der Umsetzung in einem geeigneten Lösungsmittel oder Lösungsmittelgemisch gelöst und dann mit dem mindestens eine funktionelle Gruppe aufweisenden, gegebenenfalls ebenfalls in einem geeigneten Lösungsmittel oder Lösungsmittelgemisch vorliegenden Polymer umgesetzt werden. Es ist aber auch möglich, das Aktivierungsreagens, sollte dieses an sich in fester Form vorliegen, direkt zum gegebenenfalls in einem geeigneten Lösungsmittel oder Lösungsmittelgemisch vorliegenden Polymer zu geben.

Im Rahmen des erfindungsgemäßen Verfahrens ist es auch möglich, zur Verbesserung der Löslichkeit des Polymers von einem vorderivatisierten Polymer auszugehen. Dabei werden zweckmäßigerweise der Derivatisierungsgrad des vorderivatisierten Polymers und/oder die Art der Derivatisierungsgruppen, die das vorderivatisierte Polymer aufweist, entsprechend dem verwendeten Lösungsmittel oder Lösungsmittelgemisch, in dem das vorderivatisierte Polymer löslich sein soll, eingestellt.

Dabei wird das Aktivierungsreagens in der Regel so gewählt werden, daß die mindestens eine funktionelle Gruppe des Polymers während der Umsetzung mit dem Aktivierungsreagens reagiert und damit in ihrer Reaktivität bei einer nachfolgenden Umsetzung mit einem Derivatisierungsreagens verbessert wird.

Im Rahmen dieser Ausführungsform des erfindungsgemäßen Verfahrens können das mindestens eine funktionelle Gruppe aufweisende Polymer mit mindestens einem aktivierten und/oder mindestens einem nicht aktivierten Derivatisierungsreagens und/oder einem Aktivierungsreagens gleichzeitig, d.h. im Sinne einer "Eintopfreaktion" umgesetzt werden.

Über diese Umsetzung des aktivierten, mindestens eine funktionelle Gruppe aufweisenden Polymers mit einem Derivatisierungsreagens kann ein gewünschter Rest in das Polymer eingeführt werden.

Wurde, wie oben beschrieben, ein Polymer mit unterschiedlichen Aktivierungsreagenzien umgesetzt, so können diese aktivierten funktionellen Gruppen gegenüber einem oder mehreren Derivatisierungsreagenzien unterschiedliche Reaktiviät aufweisen. Demgemäß ist es im Rahmen des erfindungsgemäßen Verfahrens denkbar, auf diese Weise funktionelle Gruppen selektiv zu derivatisieren. Der Begriff "selektiv" bedeutet in diesem Zusammenhang, daß ein Polymer, das beispielsweise zwei oder mehr voneinander verschiedene funktionelle Gruppen aufweist, mit beispielsweise zwei verschiedenen Aktivierungsreagenzien umgesetzt wird, so daß eine nachfolgende Umsetzung mit einem Derivatisierungsreagens zur Derivatisierung überwiegend bis ausschließlich an der oder den aktivierten funktionellen Gruppen erfolgt, die mit einem dieser zwei Aktivierungsreagenzien aktiviert ist oder sind, in der Regel an der oder den bezüglich des Derivatisierungsreagens reaktiveren aktivierten funktionellen Gruppe(n).

Dabei können zwei oder mehr voneinander verschiedene funktionelle Gruppen mit voneinander verschiedenen oder gleichen Aktivierungsreagenzien umgesetzt werden, oder aber zwei oder mehr gleiche funktionelle Gruppen mit voneinander verschiedene Aktivierungsreagenzien umgesetzt werden.

Dabei ist es in der Regel so, daß bei der Umsetzung der mit dem Aktivierungsreagens aktivierten funktionellen Gruppe mit dem Derivatisierungsreagens ein Teil des Aktivierungsreagens, der nach der Umsetzung mit der funktionellen Gruppe des Polymers im nunmehr aktivierten Polymer verbleibt, bei der Umsetzung mit dem Derivatisierungsreagens als Abgangsgruppe fungiert.

Je nach chemischer Natur des Aktivierungsreagens und/oder des Derivatisierungsreagens ist es natürlich auch denkbar, daß bei der Umsetzung des aktivierten Polymers mit dem Derivatisierungsreagens ein Teil oder auch die Gesamtstruktur des Aktivierungsreagens, das im aktivierten Polymer vorliegt, im derivatisierten Polymer verbleibt.

Im erfindungsgemäßen Verfahren ist es weiterhin möglich, das Aktivierungsreagens vor der Umsetzung mit dem mindestens eine funktionelle Gruppe aufweisenden Polymer mit dem Derivatisierungsreagens umzusetzen, um dann dieses Umsetzungsprodukt mit dem mindestens eine funktionelle Gruppe aufweisenden Polymer umzusetzen.

Daher betrifft die vorliegende Erfindung auch ein Verfahren, wie oben beschrieben, wobei das Derivat des Aktivierungsreagens durch vorherige Umsetzung des Aktivierungsreagens mit einem Derivatisierungsreagens erhalten wird.

Dabei ist es prinzipiell denkbar, daß bei der Umsetzung des Produktes aus der Umsetzung von Aktivierungsreagens mit Derivatisierungsreagens ein Teil des Aktivierungsreagens, der in diesem Produkt vorliegt, bei der Umsetzung mit dem Polymer als Abgangsgruppe fungiert.

Ebenso ist es, bei entsprechender Wahl des Aktivierungsreagens und/oder des Derivatisierungsreagens, im Rahmen des erfindungsgemäßen Verfahrens denkbar, daß bei der Umsetzung des Produktes aus der Umsetzung von Aktivierungsreagens und Derivatisierungsreagens mit dem mindestens eine funktionelle Gruppe aufweisenden Polymer ein Teil oder die Gesamtheit der im Umsetzungsprodukt aus Aktivierungsreagens und Derivatisierungsreagens vorliegenden Struktur des Aktivierungsreagens im Polymer verbleibt.

Eine weitere, denkbare Ausführungsform der vorliegenden Erfindung besteht darin, das mindestens eine funktionelle Gruppe aufweisende Polymer mit verschiedenen Produkten aus Umsetzungen von Aktivierungsreagenzien und Derivatisierungsreagenzien umzusetzen. So kann beispielsweise ein Gemisch aus Verbindungen mit dem Polymer umgesetzt werden, wobei das Gemisch Umsetzungsprodukte aus einem Aktivierungsreagens und zwei oder mehr verschiedenen Derivatisierungsreagenzien umfaßt. Ebenso ist ein Gemisch denkbar, das Umsetzungsprodukte aus einem Derivatisierungsreagens und zwei oder mehr verschiedenen Aktivierungsreagenzien umfaßt. Natürlich ist es auch möglich, sollte dies erforderlich sein, ein Gemisch einzusetzen, das Umsetzungsprodukte aus zwei oder mehr verschiedenen Aktivierungsreagenzien und zwei oder mehr verschiedenen Derivatisierungsreagenzien umfaßt. Selbstverständlich ist es im Rahmen der vorliegenden Erfindung auch möglich, die verschiedenen Umsetzungsprodukte aus Aktivierungsreagens und Derivatisierungsreagens nicht im Gemisch, sondern einzeln und in der gewünschten Reihenfolge mit dem mindestens eine funktionelle Gruppe aufweisenden Polymer umzusetzen.

Demgemäß beschreibt die vorliegende Erfindung auch ein Verfahren wie oben beschrieben, wobei das mindestens eine funktionelle Gruppe aufweisende Polymer mit mindestens zwei verschiedenen Derivaten eines Aktivierungsreagens umgesetzt wird und die Umsetzungen mit jeweils einem Derivat nacheinander erfolgen.

Dabei ist es denkbar, daß das derivatisierte Polymer, hergestellt wie oben beschrieben, nach der Umsetzung des mindestens eine funktionelle Gruppe aufweisenden Polymers in flüssiger, homogener Phase als Feststoff vorliegt. Um eventuell weitere Umsetzungen ebenfalls in homogener, flüssiger Phase durchzuführen, ist denkbar, nach der Umsetzung des mindestens eine funktionelle Gruppe aufweisenden Polymers das Lösungsmittel oder das Lösungsmittelgemisch zu wechseln, so daß das derivatisierte Polymer wieder als gelöste Substanz vorliegt.

Das Aktivierungsreagens leitet sich von einer Verbindung der folgenden Struktur (I) ab: 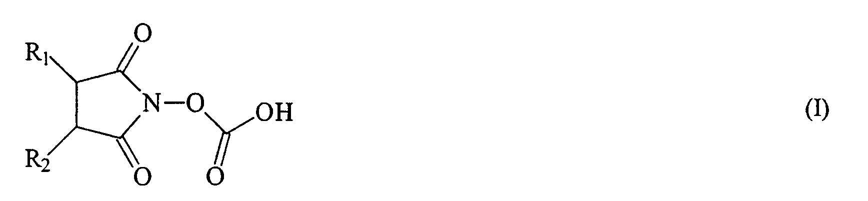 wobei R₁ und R₂ gleich oder unterschiedlich sind und geradkettig, verzweigtkettig oder zu einem Carbozyklus oder einem Heterozyklus verbrückt sein können und so gewählt sind, daß das Aktivierungsreagens oder das Derivat des Aktivierungsreagens mit dem mindestens eine funktionelle Gruppe aufweisenden Polymer in homogener Phase umgesetzt werden kann.

Dabei können R₁ und R₂ beispielsweise Cycloalkyl-, Cykloalkenyl-, Alkyl-, Aryl- oder Aralkyl-Reste mit bis zu 30 C-Atomen sein.

In einer bevorzugten Ausfiihrungsform beschreibt die vorliegende Erfindung ein Verfahren, wie oben beschrieben, das dadurch gekennzeichnet ist, daß sich das Aktivierungsreagens von einer Verbindung der folgenden Struktur (I') ableitet, 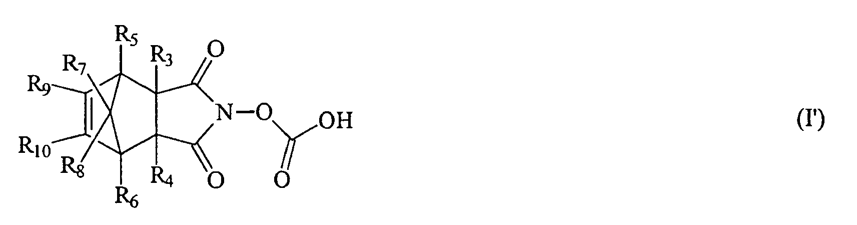 wobei R₃ bis R₁₀ gleich oder unterschiedlich sein können und Wasserstoff, geradkettige oder verzweigtkettige Alkyl-, Aryl-, Cycloalkyl-, heterocyclische und Aralkyl-Reste mit bis zu 30 C-Atomen darstellen können, oder aber mehrere der R₃ bis R₁₀ wiederum zu einem Carbo- oder Heterozyklus verbrückt sein können und so gewählt sind, daß das Aktivierungsreagens oder das Derivat des Aktivierungsreagens mit dem mindestens eine funktionelle Gruppe aufweisenden Polymer in homogener Phase umgesetzt werden kann.

Weiter beschreibt die vorliegende Erfindung ein Verfahren, wie oben beschrieben, dadurch gekennzeichnet, daß das Aktivierungsreagens folgende Struktur (II) aufweist, 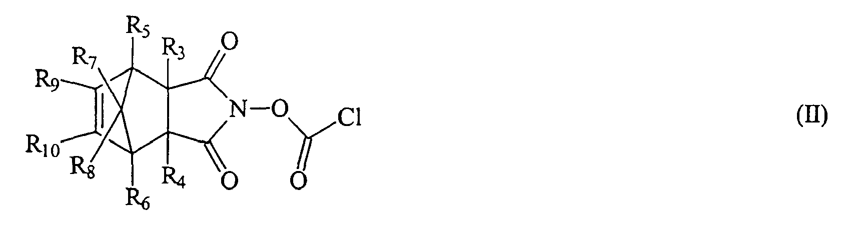 wobei R₃ bis R₁₀ wie oben definiert sind.

Dabei können R₃ bis R₁₀ beispielsweise geeignet ausgewählt werden aus der Gruppe bestehend aus Alkyl-, Aryl- und Aralkyl-Reste mit bis zu 30 C-Atomen.

In einer besonders bevorzugten Ausführungsform beschreibt die vorliegende Erfindung ein Verfahren, wie oben beschrieben, das dadurch gekennzeichnet ist, daß sich das Aktivierungsreagens von einer Verbindung der Struktur (II), wie oben angegeben, ableitet, wobei R₃ bis R₁₀ jeweils Wasserstoff ist.

Als besonders bevorzugtes Aktivierungsreagens wird im erfindungsgemäßen Verfahren die Verbindung der Struktur (II), bei der die Reste R₃ bis R₁₀ Wasserstoff sind, im weiteren als ONB-Cl bezeichnet, eingesetzt.

Die Verbindungen mit den Strukturen (I), (I') und (II) sind nach allen gängigen, aus dem Stand der Technik bekannten Verfahren herstellbar. Ein solches Verfahren für ONB-Cl ist beispielsweise in P. Henklein et al., Z. Chem. 9 (1986), S. 329 f. angegeben.

Mit den wie oben beschriebenen Aktivierungsreagenzien oder Derivaten von Aktivierungsreagenzien können im Prinzip alle Polymere, die mindestens eine mit den Aktivierungsreagenzien reaktive funktionelle Gruppe aufweisen, umgesetzt werden.

Ganz allgemein werden im erfindungsgemäßen Verfahren Polymere eingesetzt, die als mindestens eine funktionelle Gruppe eine Gruppe aufweisen, die mindestens eine nucleophile Einheit aufweist.

Als bevorzugte funktionelle Gruppen des mindestens eine funktionelle Gruppe aufweisenden Polymers sind u.a. OH-Gruppen, gegebenenfalls substituierte Amingruppen, SH-Gruppen, OSO₃H-Gruppen, SO₃H-Gruppen, OPO₃H₂-Gruppen, OPO₃HR₁₁-Gruppen, PO₃H₂-Gruppen, PO₃HR₁₁-Gruppen, COOH-Gruppen und Gemische aus zwei oder mehr davon zu nennen, wobei jeweils R₁₁ so gewählt ist, daß das Aktivierungsreagens oder das Derivat des Aktivierungsreagens mit dem mindestens eine funktionelle Gruppe aufweisenden Polymer in homogener Phase umgesetzt werden kann.

Daher betrifft die vorliegende Erfindung auch ein Verfahren, wie oben beschrieben, dadurch gekennzeichnet, daß die funktionelle Gruppe des mindestens eine funktionelle Gruppe aufweisenden Polymers eine OH-Gruppe, eine NHR₁₁-Gruppe, eine SH-Gruppe, eine OSO₃H-Gruppe, eine SO₃H-Gruppe, eine OPO₃H₂-Gruppe, eine OPO₃HR₁₁-Gruppe, eine PO₃H₂-Gruppe, eine PO₃HR₁₁-Gruppe, eine COOH-Gruppe oder ein Gemisch aus zwei oder mehr davon ist.

Ebenso können die mindestens eine funktionelle Gruppe aufweisenden Polymere auch weitere polare Gruppen, wie beispielsweise -CN, enthalten.

Als das mindestens eine funktionelle Gruppe aufweisende Polymer können sowohl natürliche als auch synthetische Polymere eingesetzt werden. Eventuelle Einschränkungen bei der Auswahl der Polymere ergeben sich nur dadurch, daß die Umsetzung des Polymers im Rahmen des erfindungsgemäßen Verfahrens in homogener Phase vorgenommen wird und aus dem späteren Verwendungszweck des derivatisierten Polymers.

Dabei fallen im Rahmen dieser Erfindung unter den Begriff "Polymer" selbstverständlich ebenso höhermolekulare Verbindungen, die in der Polymerchemie als "Oligomere" bezeichnet werden.

Ohne auf bestimmte Polymere beschränken zu wollen, seien als mögliche, mindestens eine funktionelle Gruppe aufweisende Polymere u.a. genannt:
- Polysaccharide, wie z.B. Cellulose, Amylose und Dextrane;
- Oligosaccharide wie z.B. Cyclodextrine;
- Chitosan;
- Polyvinylalkohol, Poly-Thr, Poly-Ser;
- Polyethylenimin, Polyallylamin, Polyvinylamin, Polyvinylimidazol, Polyanilin, Polypyrrol, Poly-Lys;
- Poly(meth)acrylsäure(ester), Polyitaconsäure, Poly-Asp;
- Poly-Cys;

Ebenso sind nicht nur Homopolymere, sondern auch Copolymere und insbesondere Block-Copolymere und statistische Copolymere prinzipiell geeignet, um im vorliegenden Verfahren eingesetzt zu werden.

Dabei sind sowohl Copolymere mit nicht-funktionalisierbaren Anteilen wie etwa Co-Styrol oder Co-Ethylen oder auch Copolymere wie etwa Co-Pyrrolidon zu nennen.

Dabei liegen die Molmassen der als Ausgangsmaterialien verwendeten, mindestens eine funktionelle Gruppe aufweisenden Polymere vorzugsweise im Bereich von 10000 bis 50000 Dalton.

Um eine optimale Löslichkeit zu erreichen, werden vorzugsweise gemischtfunktionale oder auch vorderivatisierte Polymere eingesetzt. Als Beispiele hierfür sind etwa zu nennen:
- partiell oder vollständig alkylierte oder acylierte Cellulose;
- Polyvinylacetat / Polyvinylalkohol;
- Polyvinylether / Polyvinylalkohol;
- N-Butylpolyvinylamin / Polyvinylamin.

Ebenso können auch Polymer / Copolymer-Gemische verwendet werden. Dabei können alle geeigneten Polymer / Copolymer-Gemische eingesetzt werden, beispielsweise Gemische aus den oben bereits genannten Polymeren und Copolymeren, wobei unter anderem hierbei etwa zu nennen ist:
- Poly(acrylsäure)-Co-Vinylacetat;
- Polyvinylalkohol-co-Ethylen;
- Polyoxymethylen-co-Ethylen;
- modifizierte Polystyrole, wie z.B. Copolymere des Styrols mit (Meth)acrylsäure(estern);
- Polyvinylpyrrolidon und dessen Copolymere mit Poly(meth)acrylaten.

In einer bevorzugten Ausführungsform werden die obigen Gemische und/oder Copolymerisate so ausgeführt, daß eine Komponente keine funktionellen Gruppen aufweist, während die andere Komponente funktionelle Gruppen aufweist, die dann erfindungsgemäß aktiviert werden können.

Wird, wie oben beschrieben, das mindestens eine funktionelle Gruppe aufweisende Polymer mit einem Aktivierungsreagens wie beispielsweise einer Verbindung der Struktur (II) umgesetzt, so wird, wie ebenfalls oben beschrieben, dieses Umsetzungsprodukt mit einem Derivatisierungsreagens umgesetzt.

Hierbei können prinzipiell alle Reagenzien, die mit dem aktivierten Polymer reagieren können und unmittelbar oder mittelbar zum gewünschten derivatisierten Polymer führen, verwendet werden. Unter anderem werden im erfindungsgemäßen Verfahren Verbindungen als Derivatisierungsreagenzien eingesetzt, die mindestens eine nucleophile Gruppe aufweisen.

Beispielsweise werden Derivatisierungsreagenzien verwendet, die die allgemeine Zusammensetzung HY-R₁₂ aufweisen. Dabei steht Y beispielsweise für O, NH, NR₁₃ oder S, wobei R₁₂ und R₁₃ i.a. frei gewählt werden können. Beispielsweise stehen sie für einen, gegebenenfalls geeignet substituierten, Alkyl- oder Arylrest.

Daneben ist es auch möglich, das aktivierte Polymer mit nucleophilen chiralen Verbindungen umzusetzen. Als Beispiele für solche chiralen Nucleophile seien beispielsweise genannt:
Borneol, (-)-Menthol, (-)-Ephedrin, α-Phenylethylamin, Adrenalin, Dopamin.

Eine weitere Möglichkeit ist es, im erfindungsgemäßen Verfahren das aktivierte Polymer mit einem aminogruppenhaltigen ein- oder mehrwertigen Alkohol bzw. Thiol umzusetzen. Wird das mindestens eine funktionelle Gruppe enthaltende Polymer beispielsweise mit ONB-C1 aktiviert, so reagiert der aminogruppenhaltige ein- oder mehrwertige Alkohol oder das aminogruppenhaltige ein- oder mehrwertige Thiol selektiv mit der Aminogruppe. Die somit in das Polymer eingeführten OH- oder SH-Gruppen lassen sich dann in einem weiteren Schritt wieder mit beispielsweise einem der oben beschriebenen Aktivierungsreagenzien aktivieren, wodurch Kettenverlängerungen und Verzweigungen, je nach Wertigkeit der ursprünglich eingesetzten Alkohole oder Thiole, ermöglicht werden.

In einer anderen, bereits oben beschriebenen Ausführungsform des erfindungsgemäßen Verfahrens wird das mindestens eine funktionelle Gruppe aufweisende Polymer mit einem aktivierten Derivatisierungsreagens umgesetzt, wobei letzteres aus der Umsetzung eines Aktivierungsreagens mit dem Derivatisierungsreagens erhalten wird.

Vorzugsweise werden im erfindungsgemäßen Verfahren aktivierte Derivate von Aminen, Alkoholen, Thiolen, Carbonsäuren, Sulfonsäuren, Sulfaten, Phosphaten oder Phosphonsäuren mit dem mindestens eine funktionelle Gruppe aufweisenden Polymer umgesetzt, wobei, wiederum in einer bevorzugten Ausführungsweise, die Verbindungen mit ONB-Cl aktiviert werden.

Unter anderem weisen also diese aktivierten Derivatisierungsreagenzien, die mit dem mindestens eine funktionelle Gruppe aufweisenden Polymer umgesetzt werden können, die folgenden allgemeinen Strukturen (III) bis (IX) auf: 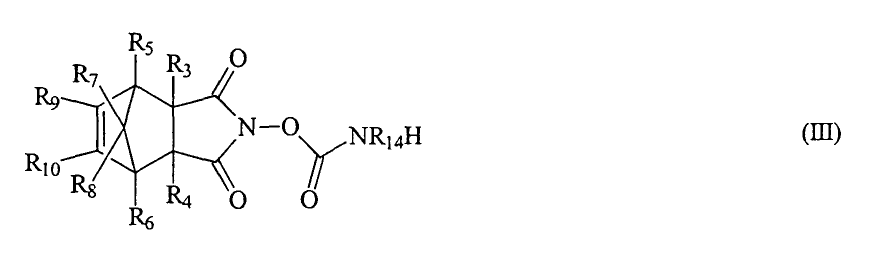 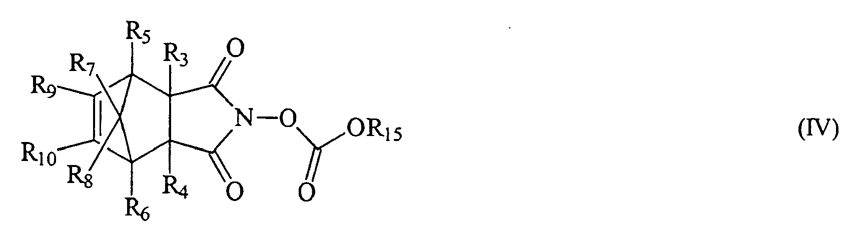 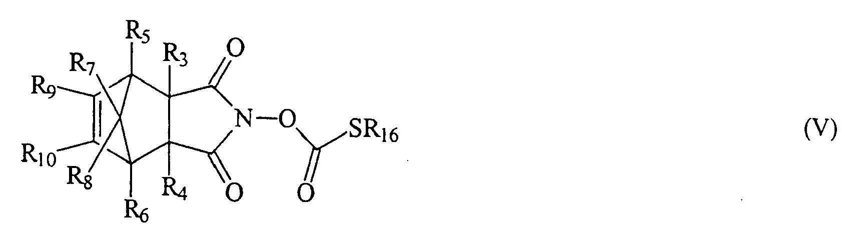 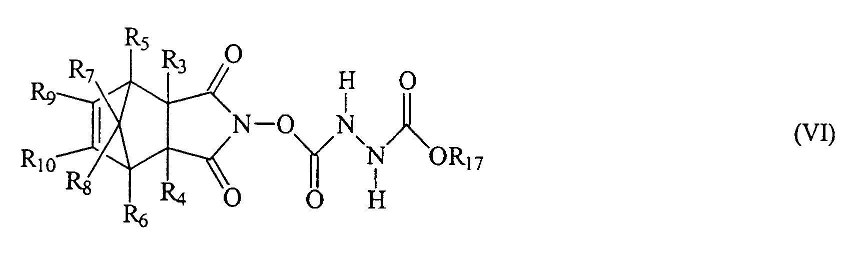 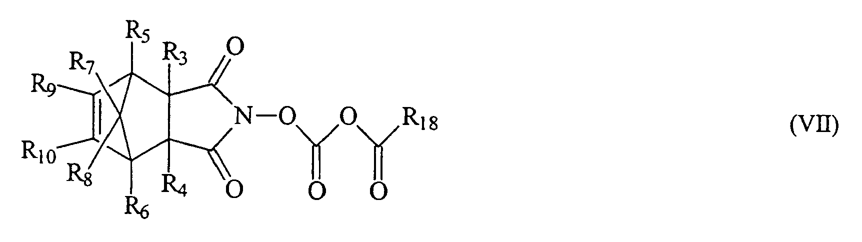 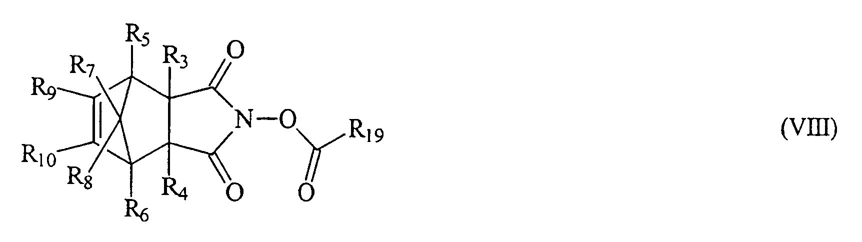 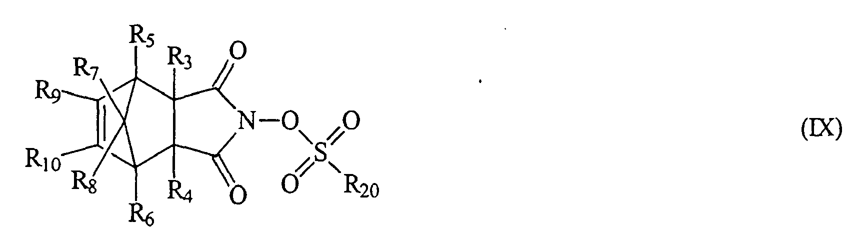 wobei R₃ bis R₁₀ wie oben definiert sind und R₁₄ bis R₂₀ im allgemeinen keinen Beschränkungen unterliegen, beispielsweise auch Chiralität aufweisen können, und im erfindungsgemäßen Verfahren so gewählt werden, daß die Umsetzung mit dem mindestens eine funktionelle Gruppe aufweisenden Polymer in homogener Phase durchgeführt werden kann. Dabei werden die Substituenten R₁₄ bis R₂₀ in der Regel in Abhängigkeit von der gewünschten Wechselwirkung mit dem Substrat gewählt. Dabei können R₁₄ bis R₂₀ gleich oder verschieden sein und Wasserstoff, einen geradkettigen oder verzweigtkettigen Alkyl-, Aryl- oder Aralkylrest mit bis zu 30 C-Atomen oder entsprechende Heteroatome aufweisende Reste darstellen.

Daher beschreibt die vorliegende Erfindung auch ein Derivat eines Aktivierungsreagens gemäß Struktur (II), dadurch gekennzeichnet, daß es eine der beiden Strukturen (II') oder (II") aufweist, 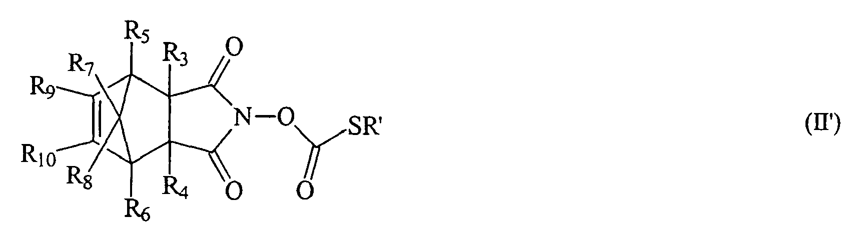 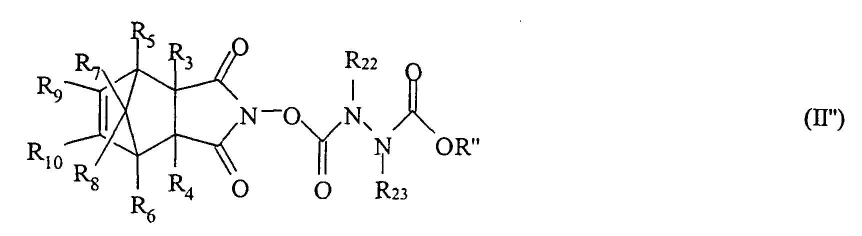 wobei R₃ bis R₁₀ wie oben definiert sind, R₂₂ und R₂₃ wie R₁₄ bis R₂₀ definiert sind und gleich oder verschieden voneinander sein können, und R' und R" gleich oder verschieden sein können und Alkyl-, Aryl- oder Aralkylreste sein können und im erfindungsgemäßen Verfahren so gewählt werden, daß die Umsetzung mit dem mindestens eine funktionelle Gruppe aufweisenden Polymer in homogener Phase durchgeführt werden kann. Ferner werden auch die obigen Substituenten an den Strukturen (II') und (II") so gewählt, daß die gewünschten Wechselwirkungen mit dem Substrat erreicht werden können.

Ebenso können mehrwertige Amine, Alkohole, Thiole, Carbonsäuren, Sulfonsäuren, Sulfate, Phosphate oder Phosphonsäuren mit einem Aktivierungsreagens umgesetzt werden und dieses Umsetzungsprodukt mit dem mindestens eines funktionelle Gruppe aufweisenden Polymer umgesetzt werden, wobei hier insbesondere Polyole zu nennen sind.

Selbstverständlich ist es auch denkbar, Derivatisierungsreagenzien zu aktivieren und mit dem mindestens eine funktionelle Gruppe aufweisenden Polymer umzusetzen, die zwei oder mehr verschiedene Arten der oben genannten funktionellen Gruppen aufweisen. Als Beispiel, unter anderem, sind hierbei etwa Aminoalkohole zu nennen.

Solche mehrwertigen Derivatisierungsreagenzien können im Rahmen der vorliegenden Erfindung selektiv partiell oder vollständig mit einem Aktivierungsreagens aktiviert und mit dem mindestens eine funktionelle Gruppe aufweisenden Polymer umgesetzt werden.

Die Umsetzung des mindestens eine funktionelle Gruppe aufweisenden Polymers mit einem aktivierten, mehrwertigen Derivatisierungsreagens kann im erfindungsgemäßen Verfahren zur Polymervernetzung, zur Polymerstabilisierung und zur Polymerverzweigung verwendet werden.

Sowohl die Umsetzung des mindestens eine funktionelle Gruppe aufweisenden Polymers mit einem aktivierten Derivatisierungsreagens als auch die Umsetzung des mindestens eine funktionelle Gruppe aufweisenden Polymers mit einem Aktivierungsreagens und anschließender Umsetzung des Produktes mit einem Derivatisierungsreagens nach dem erfindungsgemäßen Verfahren ermöglicht es, Polymerderivate herzustellen, die verschiedenste räumliche Anordnungen aufweisen und demzufolge für eine Vielzahl von Anwendungen, in denen diese räumliche Anordnung von entscheidender Bedeutung ist, verwendbar sind.

So lassen sich beispielsweise Anordnungen realisieren, die wie Hairy Rods, Kammpolymere, Netze, Körbe, Schalen, Röhren, Trichter oder Reußen aufgebaut sind.

Die Umsetzungen können dabei in aprotisch-dipolaren und/oder polarprotischen Lösungsmitteln oder Lösungsmittelgemischen wie z.B. wäßrigen Lösungsmittelgemischen erfolgen. Je nach umzusetzendem Polymer und verwendetem Aktivierungs- und/oder Derivatisierungsreagens können in diesen Lösungsmittelgemischen neben Wasser verschiedene weitere Lösungsmittel vorliegen. Bevorzugt werden hierbei unter anderem Lösungsmittel wie z.B. aprotisch-dipolare Lösungsmittel wie z.B. DMSO, DMF, Dimethylacetamid, N-Methylpyrrolidon, THF oder MTBE eingesetzt.

Der pH-Wert, der bei den Umsetzungen gewählt werden kann, liegt dabei im erfindungsgemäßen Verfahren im allgemeinen im Bereich von 4 bis 14, bevorzugt im Bereich von 5 bis 12 und besonders bevorzugt im Bereich von 5 bis 10. Zur Einstellung eines bestimmten Bereiches des pH-Wertes kann mit geeigneten Pufferlösungen gearbeitet werden.

Über die im erfindungsgemäßen Verfahren in das Polymer über die Derivatisierung eingerührten Gruppen können geeignete chemische Substanzen, sogenannte Substrate, selektiv oder spezifisch gebunden werden. Die eingeführten Gruppen wirken dabei als Rezeptorgruppen, das derivatisierte Polymer also ganz allgemein auch als Rezeptor.

Als mögliche Wechselwirkungen mit dem Substrat sind dabei unter anderem zu nennen:
- Wasserstoffbrückenbindungen;
- Dipol-Dipol-Wechselwirkungen;
- Van der Waals-Wechselwirkungen;
- Hydrophobe Wechselwirkungen;
- Charge-Transfer-Wechselwirkungen, z.B. π-π-Wechselwirkung;
- Ionische Wechselwirkungen;
- Koordinative Bindung, z.B. an Übergangsmetallen;
- Kombinationen dieser Wechselwirkungen.

Die Wechselwirkung bzw. die Wechselwirkungen zwischen dem derivatisierten Polymer und dem Substrat kann bzw. können hierbei in festem Zustand, in Lösung, in flüssiger Phase und in der Gasphase ausgebildet werden. Durch das erfindungsgemäße Verfahren ist es möglich, durch die Derivatisierung mit maßgeschneiderten Rezeptorgruppen die Rezeptor-Substrat-Wechselwirkung zu "designen". Dies bedeutet, daß bei der Verwendung des derivatisierten Polymers bei beispielsweise Membranprozessen, Katalyse, Filtration oder Chromatographie bei Anwesenheit von zwei oder mehr Substraten eine Selektivität der Wechselwirkung bezüglich eines Substrates erreicht werden kann.

Im Rahmen der vorliegenden Erfindung kann der Derivatisierungsgrad, der in dem Fall, daß das derivatisierte Polymer als Rezeptor eingesetzt wird, der Rezeptorgruppendichte entspricht, so beeinflußt werden, daß die bestmögliche Wechselwirkung mit dem Substrat erreicht wird und eine ausreichende Löslichkeit des Polymerderivates erzielt wird.

Bevorzugt wird im Rahmen des erfindungsgemäßen Verfahrens ein Derivatisierungsgrad im Bereich von 1 bis 70 %, besonders bevorzugt im Bereich von 3 bis 60 % und insbesondere bevorzugt im Bereich von 5 bis 50 % gewählt.

Demgemäß betrifft die vorliegende Erfindung ein Derivat eines mindestens drei funktionelle Gruppen aufweisenden Polymers, wobei mindestens zwei der funktionellen Gruppen derart derivatisiert sind, daß sie als Rezeptorgruppen mit einem geeigneten Substrat wechselwirken und mindestens eine, nicht substratspezifisch wirkende funktionelle Gruppe zwischen zwei dieser derivatisierten Gruppen liegt.

Liegen mehrere funktionelle Gruppen, die für das Substrat nicht als Rezeptorgruppen wirken, im Polymer vor, so können sie von gleicher oder unterschiedlicher Art sein.

Geht man beispielsweise von einem Polymer aus, das nur eine Art von funktioneller Gruppe aufweist, so werden nicht als Rezeptorgruppe wirkende funktionelle Gruppen naturgemäß nur von einer Art sein. Denkbar ist aber beispielsweise auch, daß von einem Polymer ausgegangen wird, das zwei oder mehr unterschiedliche Arten von funktionellen Gruppen aufweist. Auch in diesem Fall ist es denkbar, daß die nicht als Rezeptorgruppen wirkenden Gruppen von einer Art sind. Dies wäre beispielsweise dann der Fall, wenn bis auf die in Rede stehende Art der funktionellen Gruppe alle weiteren Arten von funktionellen Gruppen über spezifische Derivatisierung, wie oben beschrieben, derivatisiert würden. In diesem Fall ist es aber auch denkbar, daß auch ein Anteil der in Rede stehenden Art der funktionellen Gruppe ebenfalls derivatisiert würde.

Selbstverständlich ist es auch möglich, daß die funktionellen Gruppen, die nicht als Rezeptorgruppen wirken, von unterschiedlicher Art sind. Denkbar ist beispielsweise, von einem Polymer auszugehen, das mindestens drei unterschiedliche Arten von funktionellen Gruppen aufweist, von denen bei einer spezifischen Derivatisierung, wie oben beschrieben, mindestens zwei nicht umgesetzt wurden. Denkbar ist aber auch der Fall, daß von einem Polymer ausgegangen wird, das zwei oder mehr unterschiedliche Arten von funktionellen Gruppen aufweist, von denen jeweils nur ein bestimmter Anteil derivatisiert wurde, so daß von jeder Art der funktionellen Gruppen ein bestimmter Anteil underivatisiert bleibt.

Bezüglich des erfindungsgemäßen Derivates eines mindestens eine funktionelle Gruppe aufweisenden Polymers, wie oben beschrieben, ist es denkbar, daß eine oder mehrere funktionelle Gruppen, die in underivatisierter Form vorliegen, substratspezifisch oder nicht substratspezifisch als Rezeptorgruppe wirken. Dies kann beispielsweise daher rühren, daß aufgrund des Platzbedarfs der Rezeptorgruppen ihre Wechselwirkung mit dem Substrat selbst sterisch unmöglich ist.

Denkbar ist es aber auch, daß die mindestens eine funktionelle Gruppe, die in dem Ausgangspolymer vorliegt, in underivatisierter Form einen Beitrag zur Wechselwirkung mit dem Substrat leistet.

Bevorzugt ist ein Derivat eines funktionelle Gruppen aufweisenden Polymers, in dem die mindestens eine, nicht substratspezifisch wirkende funktionelle Gruppe mit einer Endcapping-Gruppe derivatisiert ist.

Demgemäß beschreibt die vorliegende Erfindung auch ein Derivat eines mindestens drei funktionelle Gruppen aufweisenden Polymers, wobei die mindestens eine, nicht substratspezifisch wirkende funktionelle Gruppe mit einer Endcapping-Gruppe derivatisiert ist.

Durch geschickte Wahl der Endcapping-Gruppe ist es auch möglich, die Löslichkeit des mit der Endcapping-Gruppe oder mit den Endcapping-Gruppen versehenen Polymerderivats zu beeinflussen und den Erfordernissen bei eventuellen späteren, weiteren Umsetzungen anzupassen.

Als Endcapping-Gruppe kann prinzipiell jede Gruppe gewählt werden, die eine funktionelle Gruppe inert oder weitestgehend inert gegen Wechselwirkungen mit dem Substrat macht. Der Begriff "inert" bedeutet in diesem Zusammenhang, daß die Wechselwirkungen, die das Substrat mit den Rezeptorgruppen des derivatisierten Polymers eingeht, im Vergleich zu den Wechselwirkungen, die dieses Substrat mit einer oder mehreren der durch die Endcapping-Gruppe derivatisierten funktionellen Gruppe eingeht, so stark sind, daß das Substrat im wesentlichen nur über die Rezeptorgruppen gebunden wird.

Ist es gewünscht, über die Wechselwirkung zwischen Substrat und Rezeptorgruppe zwei oder mehr unterschiedliche Substrate, beispielsweise in einem chromatographischen Prozeß, zu trennen, so muß die Endcapping-Gruppe die funktionelle Gruppe gegenüber möglichen Wechselwirkungen, wie oben beschrieben, nicht völlig inert machen. In diesem Fall genügt es beispielsweise, wenn die Endcapping-Gruppe mit den zwei oder mehr zu trennenden Substraten genügend schwache oder unspezifische Wechselwirkungen eingeht, die für den Trennprozeß keine Rolle spielen.

Als Endcapping-Gruppe kann dabei jede geeignete Gruppe gemäß dem Stand der Technik verwendet werden. Je nach Substrat ist es beispielsweise denkbar, daß als Endcapping-Gruppe eine Gruppe gewählt wird, die kein H-Donor ist. Bevorzugt wird dabei 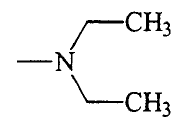 besonders bevorzugt 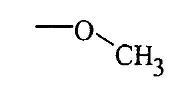 eingesetzt.

Ferner beschreibt die vorliegende Erfindung ein Derivat der hier in Rede stehenden Art, das mindestens eine Rezeptorgruppe aufweist, die eine für die Bindung eines biologischen Substrats maßgebliche Bindungseinheit aufweist.

Ein derartiges für biologische Substrate maßgeschneidertes Derivat weist dann entsprechende Rezeptorgruppen, die z.B. auch in der Natur vorkommende Strukturen oder für die Bindung verantwortliche Teile derartiger Strukturen aufweisen können, auf, die dann mit einem biologischen Substrat in Wechselwirkung treten können. Dabei sind hier insbesondere Enzym-, Aminosäure-, Peptid-, Zucker-, Aminozucker-, Zuckersäuren- sowie Oligosaccharid-Gruppen bzw. Derivate davon zu nennen. Essentiell für die obigen Rezeptorgruppen ist ausschließlich, daß das in der Natur vorkommende Bindungsprinzip eines Rezeptors mit einem Substrat beibehalten wird, so daß mittels dieser Ausführungsform z.B. synthetische Enzyme, bindende Domänen von Antikörpern oder sonstige physiologische Epitope erhalten werden können.

Als Rezeptorgruppe kann im erfindungsgemäßen Derivat eines mindestens drei funktionelle Gruppen aufweisenden Polymers jeder wie oben im erfindungsgemäßen Verfahren beschriebene Rest eingeführt werden, der durch Umsetzung des Polymers mit mindestens einem aktivierten Derivatisierungsreagens, das mindestens eine nucleophile Gruppe umfaßt, oder durch Umsetzung des aktivierten Polymers mit mindestens einem solchen Derivatisierungsreagens erhalten werden kann.

Unter anderem bevorzugt wird im Rahmen der vorliegenden Erfindung ein Derivat eines mindestens drei funktionelle Gruppen aufweisenden Polymers, wie oben beschrieben, bei dem mindestens eine Rezeptorgruppe ein Aminosäure-Rest oder ein Aminosäurederivat-Rest ist.

Demgemäß beschreibt die vorliegende Erfindung auch ein Derivat eines mindestens drei funktionelle Gruppen aufweisenden Polymers, wie oben beschrieben, dadurch gekennzeichnet, daß mindestens eine Rezeptorgruppe ein Aminosäure-Rest oder ein Aminosäurederivat-Rest ist.

Um das funktionelle Gruppen aufweisende Polymer mit Aminosäure-Resten oder Aminosäurederivat-Resten zu derivatisieren, kann man nach dem oben beschriebenen Verfahren vorgehen. So ist es denkbar, zuerst die Umsetzung der Aminosäure mit einem geeigneten Aktivierungsreagens durchzuführen und dann das Umsetzungsprodukt mit dem Polymer umzusetzen. Ebenso ist es denkbar, zuerst das Polymer mit einem geeigneten Aktivierungsreagens zu aktivieren und dann mit der Aminosäure umzusetzen. Natürlich ist es auch denkbar, Polymer, Aminosäure und Aktivierungsreagens direkt zusammenzugeben.

Je nach Wahl der Aminosäure kann es notwendig sein, eventuell vorhandene funktionelle Gruppen an der Aminosäure bei der Derivatisierung und / oder der Aktivierung mit Schutzgruppen zu schützen. Hierbei sind alle geeigneten Schutzgruppen möglich, die aus dem Stand der Technik bekannt sind. Je nach späterer Verwendung des Polymers können diese Schutzgruppen nach der Derivatisierung am Aminosäurerest verbleiben oder wieder abgespalten werden.

Als Aminosäuren sind beispielsweise denkbar:
- Aminosäuren mit aliphatischen Resten wie z.B. Glycin, Alanin, Valin, Leucin, Isoleucin;
- Aminosäuren mit einer aliphatischen Seitenkette, die eine oder mehrere Hydroxylgruppen umfaßt, wie z.B. Serin, Threonin;
- Aminosäuren, die eine aromatische Seitenkette aufweisen, wie z.B. Phenylalanin, Tyrosin, Tryptophan;
- Aminosäuren, die basische Seitenketten umfassen, wie z.B. Lysin, Arginin, Histidin;
- Aminosäuren, die saure Seitenketten aufweisen, wie z.B. Asparaginsäure, Glutaminsäure;
- Aminosäuren, die Amidseitenketten aufweisen, wie z.B. Asparagin, Glutamin;
- Aminosäuren, die schwefelhaltige Seitenketten aufweisen, wie z.B. Cystein, Methionin;
- Modifizierte Aminosäuren, wie z.B. Hydroxyprolin, γ-Carboxylglutamat, *O*-Phosphoserin;
- Derivate der genannten oder von gegebenenfalls weiteren Aminosäuren, beispielsweise an der oder gegebenenfalls den Carboxylgruppen mit beispielsweise Alkyl- oder Arylresten, die gegebenenfalls geeignet substituiert sein können, veresterte Aminosäuren.

Dabei können die Aminosäuren prinzipiell über jede ihrer funktionellen Gruppen an das Polymer gebunden werden.

Statt der Aminosäure ist auch die Verwendung eines oder mehrerer Di- oder Oligopeptide denkbar, wobei insbesondere Homopeptide, die nur aus gleichen Aminosäuren aufgebaut sind, zu nennen sind. Als Beispiel für ein Dipeptid ist beispielsweise Hippursäure zu nennen. Weiter können auch β-, γ- oder sonstige strukturisomeren Aminosäuren und davon abgeleitete Peptide wie z.B. Depsipeptide verwendet werden.

Im erfindungsgemäßen Verfahren, wie oben beschrieben, ist es möglich, ein funktionelle Gruppen aufweisendes Polymer so zu derivatisieren, daß es unterschiedlichen Rezeptorgruppen aufweist.

Demgemäß beschreibt die vorliegende Erfindung auch ein Derivat eines mindestens drei funktionelle Gruppen aufweisenden Polymers, wie oben beschrieben, das mindestens zwei verschiedene Rezeptorgruppen aufweist.

Gemäß oben Gesagtem ist demzufolge auch ein Derivat eines funktionelle Gruppen aufweisende Polymers denkbar, das zwei oder mehr verschiedene Aminosäure-Reste oder Aminosäurederivat-Reste aufweist.

Um die Wechselwirkung mit dem Substrat zu optimieren, kann im Rahmen der vorliegenden Erfindung das flüssige oder in einem Lösungsmittel bzw. Lösungsmittelgemisch gelöste bzw. gequollene Polymerderivat in Anwesenheit des Substrates, das hierbei als Templat wirkt, verformt werden.

Demgemäß beschreibt die vorliegende Erfindung auch ein Verfahren, wie obenstehend beschrieben, dadurch gekennzeichnet, daß in einem Schritt (iii) das Derivat des mindestens eine funktionelle Gruppe aufweisenden Polymers in Gegenwart einer Templatverbindung verformt wird.

Dabei geht man bei der Verformung beispielsweise so vor, daß man in einem geeigneten Lösungsmittel oder Lösungsmittelgemisch ein derivatisiertes Polymer, wie oben beschrieben, mit Substrat zusammengibt und dem Polymer die Möglichkeit gibt, dabei eine oder mehrere energetisch begünstigte Konformationen einzunehmen.

Ebenso beschreibt die vorliegende Erfindung ein Derivat eines mindestens eine funktionelle Gruppe aufweisenden Polymers, dadurch gekennzeichnet, daß es eine oder mehrere Konformationen aufweist, die an ein geeignetes Substrat angepaßt sind.

Dabei ist es natürlich auch denkbar, ein derivatisiertes Polymer mit verschiedenen Substraten zusammenzugeben und zu verformen. Weiter ist es auch denkbar, sollte dies erforderlich sein, verschiedene derivatisierte Polymere mit einem oder mehreren verschiedenen Substraten zusammenzugeben und zu verformen.

Selbstverständlich ist es auch denkbar, daß das Derivat des mindestens eine funktionelle Gruppe aufweisenden Polymers ohne Templat verformt wird.

Im Anschluß an die Verformung kann im Rahmen der vorliegenden Erfindung die Konformation des Polymerderivates, die sich durch die Verformung in Anwesenheit des Templates gebildet hat, fixiert werden.

Daher beschreibt die vorliegende Erfindung auch ein Verfahren, wie oben beschrieben, dadurch gekennzeichnet, daß eine aus der Verformung resultierende Konformation des Derivats des mindestens eine funktionelle Gruppe aufweisenden Polymers fixiert wird.

Hierbei ist es möglich, das verformte Polymer vor der Fixierung auf einen Träger aufzubringen.

Das Trägermaterial und die Form des Trägers sind dabei im wesentlichen frei wählbar, wobei das Trägermaterial jedoch so beschaffen sein muß, daß das Polymer dauerhaft auf dem Träger aufgebracht werden kann.

Wird das auf dem Träger aufgebrachte derivatisierte Polymer in Stofftrennprozessen verwendet, so wird ein Trägermaterial eingesetzt, das, nachdem das derivatisierte Polymer aufgebracht wurde, mit den zu trennenden Stoffen keine oder nur eine oder mehrere unspezifische Wechselwirkungen eingeht.

Je nach späterem Einsatzgebiet kann es erforderlich sein, daß das Trägermaterial druckstabil ist. Der Begriff "druckstabil" bedeutet in diesem Zusammenhang, daß das Trägermaterial bei Drücken bis zu 100 bar formstabil ist.

Als Trägermaterialien können poröse und nicht-poröse Materialien verwendet werden. Unter anderem sind hierbei beispielsweise Titandioxid, Silicagel oder Cellulose zu nennen.

Die Form des Trägermaterials kann dabei den Erfordernissen des Verfahrens angepaßt werden und unterliegt keinen Beschränkungen. Denkbar sind beispielsweise tabletten-, kugel- oder strangförmige Träger.

Die Aufbringung auf das Trägermaterial ist im Rahmen des erfindungsgemäße Verfahrens ebenfalls frei wählbar. Denkbar sind beispielsweise das Aufbringen durch Imprägnieren, Eintauchen des Trägers in eine entsprechende Polymerlösung, Aufsprühen des Polymers oder Aufrotieren des Polymers.

Selbstverständlich ist es auch möglich, das derivatisierte Polymer auf verschiedenen geeigneten Trägem aufzubringen. Ebenso ist es möglich, zwei oder mehr voneinander verschiedene derivatisierte Polymere auf einem oder mehreren geeigneten Trägern aufzubringen.

In einer weiteren Ausführungsform des erfindungsgemäßen Verfahrens wird das derivatisierte, verformte und fixierte Polymer an sich zu einem porösen Material verarbeitet, so daß kein zusätzlicher Träger benötigt wird. Dabei können z.B. Beads, unregelmäßige Partikel, Schwämme, Scheiben, Stränge, Membranen erhalten werden.

Zur Fixierung sind prinzipiell alle denkbaren Verfahren einsetzbar. Insbesondere sind hierbei Temperaturänderung, Lösungsmittelwechsel, Fällung und Vernetzung zu nennen. Bevorzugt wird die Konformation durch Vernetzung fixiert.

Demgemäß beschreibt die vorliegende Erfindung auch ein Verfahren, wie oben beschrieben, dadurch gekennzeichnet, daß die aus der Verformung resultierende Konformation durch Vernetzung fixiert wird.

Dabei kann eine Konformation fixiert werden, die sich aus einer Art von derivatisiertem Polymer gebildet hat. Ebenso ist es aber auch denkbar, daß die Konformation aus zwei oder mehr voneinander unterschiedlichen Arten von derivatisierten Polymeren gebildet wurde. Der Begriff "unterschiedliche Arten von derivatisierten Polymeren" bedeutet hierbei, daß sich die Polymere beispielsweise hinsichtlich des Basispolymers oder der Art des Aktivierungsreagens oder der Art durch Derivatisierung eingeführten Rezeptorgruppen oder des Aktivierungsgrades oder des Derivatisierungsgrades oder einer Kombination aus zwei oder mehr dieser Merkmale unterscheiden. Insbesondere können auf diese Weise Polyelektrolytkomplexe aus Polymersträngen mit kationischen oder/und anionischen Rezeptorgruppen hergestellt werden.

Die Vernetzung kann hierbei beispielsweise dadurch erreicht werden, daß zwei oder mehr Stränge von derivatisiertem Polymer direkt miteinander reagieren. Dies kann dadurch erreicht werden, daß die durch Derivatisierung eingeführten Gruppen so beschaffen sind, daß zwischen diesen Gruppen kovalente und / oder nicht-kovalente Bindungen geknüpft werden können. Ganz allgemein ist es denkbar, daß diese kovalenten und / oder nicht-kovalenten Bindungen zwischen Gruppen ausgebildet werden, die an einem Polymerstrang hängen, und / oder zwischen Gruppen ausgebildet werden, die an zwei oder mehr Polymersträngen hängen, so daß durch die Vernetzung zwei oder mehr Polymerstränge über eine oder mehrere Stellen miteinander verknüpft sein können.

Ebenso ist es auch denkbar, zur Vernetzung ein oder mehrere geeignete Vernetzungsmittel einzusetzen, mit denen, wie vorstehend beschrieben, in kovalenter und / oder nicht-kovalenter Weise Gruppen innerhalb eines Polymerstrangs und / oder Gruppen, die an mehreren Strängen von gegebenenfalls unterschiedlichen derivatisierten Polymeren hängen, vernetzt werden können.

Hierbei ist es im Rahmen der vorliegenden Erfindung insbesondere möglich, bereits bei der Derivatisierung das Derivatisierungsreagens hinsichtlich seiner chemischen Beschaffenheit unter anderem im Hinblick auf die spätere Vernetzung zu konzipieren. Insbesondere kann das Derivatisierungsreagens Gruppen enthalten, die für die kovalente und / oder nicht-kovalente Vernetzung selektiv sind.

Als Vernetzungsreagenzien kommen prinzipiell alle geeigneten, aus dem Stand der Technik bekannten Verbindungen in Betracht. Demgemäß kann die Vernetzung beispielsweise in kovalent-reversibler Weise, in kovalent-irreversibler Weise oder in nicht-kovalenter Weise erfolgen, wobei bei Vernetzung in nicht-kovalenter Weise beispielsweise Vernetzungen über ionische Wechselwirkung oder über Charge-Transfer-Wechselwirkung zu nennen sind. Derartige Vernetzungsverfahren bzw. -reagenzien sind u.a. in Han, K.K., et al., Int. J. Biochem., 16, 129 (1984), Ji, T.H., et al., Meth. Enzymol., 91, 580 (1983) und Means, G. and Feeney, R.E., Bioconj. Chem., 1, 2 (1990) beschrieben.

Als Vernetzungsreagenzien, die zu kovalent-irreversibler Vernetzung führen können, sind unter anderem zwei- oder mehrfach funktionelle Verbindungen wie beispielsweise Diole, Diamine oder Dicarbonsäuren zu nennen. Dabei werden beispielsweise zweiwertigen Vernetzer mit dem aktivierten Polymerderivat umgesetzt oder das mindestens zweiwertige aktivierte Vernetzungsreagens mit dem nicht-aktivierten Polymerderivat. Eine kovalent-reversible Vernetzung kann beispielsweise durch Knüpfen einer Schwefel-Schwefel-Bindung zu einer Disulfidbrücke zwischen zwei an einem oder zwei Polymersträngen hängenden Gruppen oder durch Bildung einer Schiffschen Base realisiert werden. Eine Vernetzung über ionische Wechselwirkung kann beispielsweise über zwei Reste zustandekommen, von denen der eine als Struktureinheit ein quartäres Ammoniumion und der andere als Struktureinheit beispielsweise -COO⁻ oder -SO₃⁻
aufweist. Eine Vernetzung über Wasserstoffbrücken kann beispielsweise zwischen zwei komplementären Basenpaaren ausgebildet werden, beispielsweise über folgende Struktur:

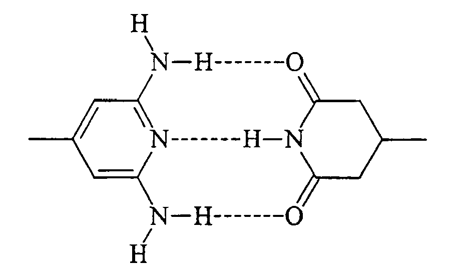

Ganz allgemein können nicht-kovalent zu vernetzende Polymerderivate bezüglich der Vernetzungsstellen komplementär aufgebaut sein, wobei zueinander komplementäre Struktureinheiten beispielsweise Säure / Triamin oder Uracil / Melamin sind. Ebenso kann bei einer nicht-kovalenten Vernetzung das Vernetzungsreagens komplementär zu den Vernetzungsstellen am Polymerstrang sein. Als Beispiel hierfür wären etwa eine Amingruppe am Polymerstrang und eine Dicarbonsäure als Vernetzungsreagens zu nennen.

Der Vernetzungsgrad kann im erfindungsgemäßen Verfahren im wesentlichen beliebig gewählt werden und beispielsweise auf die nachstehend beschriebenen Einsatzgebiete zugeschnitten werden. Bevorzugt werden jedoch Vemetzungsgrade von bis zu 5 %. Die Prozentangabe bezieht sich hierbei auf den Anteil der ursprünglich im Basispolymer vorhandenen funktionellen Gruppen, die letztlich vemetzt werden.

Natürlich ist es auch denkbar, die Konformation des Polymers zuerst zu fixieren und dann anschließend die fixierte Struktur auf einem Träger aufzubringen.

Die fixierten Polymerderivate, die nach dem erfindungsgemäßen Verfahren hergestellt werden können, werden unter anderem in der Chromatographie verwendet. Die Derivatisierungsreagenzien und die Bedingungen zur Fixierung der Konformation, wie oben beschrieben, werden hierbei so gewählt, daß im Chromatogramm das in Betracht kommende Substrat einem höheren k'-Wert als vor der Polymerverformung eluiert, bevorzugt mit dem höchsten k'-Wert aller im Gemisch vorhandenen Substanzen. Die k'-Werte der Begleitstoffe bleiben in diesen Fällen annähernd gleich oder ändern sich in der Weise, daß der Quotient α = k₂'/k₁' (k₂' bezieht sich dabei auf die Zielsubstanz, k₁' auf einen Begleitstoff) größer wird als er vor der Verformung war. Demgemäß ist es möglich, in der kontinuierlichen Chromatographie, insbesondere in der SMB-Chromatographie, ein Vielstoff-Trennproblem auf ein Zweistoff-Trennproblem zu reduzieren, da das Produkt, d.h. das in Betracht kommende Substrat, in den Extrakt geht, und alle Nebenprodukte zusammen in das Raffinat gehen.

Wurde, wie oben beschrieben, das Polymer mit chiralen Derivatisierungsreagenzien derivatisiert, gegebenenfalls verformt und vernetzt, so ist es möglich, bei Verwendung des vernetzten Polymers bei Stofftrennprozessen Racemate aufzutrennen

In einer weiteren bevorzugten Ausführungsform beschreibt die vorliegende Erfindung ein Derivat eines mindestens eine funktionelle Gruppe aufweisenden Polymers, das als Rezeptor zur Bindung mindestens eines Substrates über nicht-kovalente Rezeptor-Substrat-Wechselwirkung wirkt, wobei die Bindung des mindestens einen Substrates aufgrund der chemischen Beschaffenheit des Rezeptors über mindestens zwei, vorzugsweise drei gleiche oder verschiedene Arten von Wechselwirkungen erfolgen kann, wobei sich diese Mehrfach-Wechselwirkungen im allgemeinen synergistisch verstärken, z.B. durch polyvalenten Enthalpiegewinn.

Als Wechselwirkungen sind beispielsweise die oben bereits erwähnten Wechselwirkungen zu nennen. Unter anderem sind beispielsweise Charge-Transfer-Wechselwirkung, Wechselwirkung über Wasserstoffbrückenbindung und ionische Wechselwirkung zu nennen.

Dabei ist es denkbar, daß die unterschiedlichen Wechselwirkungen mit dem mindestens einen Substrat durch eine einzige Gattung von Rezeptorgruppen, jedoch aber auch durch zwei oder mehr verschiedene Rezeptorgruppen ausgebildet werden können.

Daher betrifft die vorliegende Erfindung ebenso ein Verfahren zur Bindung mindestens eines Substrates an mindestens eine Rezeptorgruppe über nicht-kovalente Rezeptor-Substrat-Wechselwirkung, dadurch gekennzeichnet, daß als eine die mindestens eine Rezeptorgruppe aufweisende Verbindung ein Derivat eines mindestens eine funktionelle Gruppe aufweisenden Polymers, hergestellt nach einem Verfahren wie oben definiert, oder ein Derivat wie oben definiert eingesetzt wird.

Weiter beschreibt die vorliegende Erfindung auch ein Verfahren, wie vorstehend beschrieben, wobei das Verfahren ein Chromatographieverfahren, insbesondere ein SMB-Verfahren, ein Filtrationsverfahren, ein Trennverfahren mittels einer oder mehrerer Membranen oder ein katalytisches Verfahren ist.

Erfindungsgemäß werden als Aktivierungsreagenzien Verbindungen der allgemeinen Struktur (I), wie oben beschrieben, eingesetzt, wobei die Reste R₁ und R₂ so ausgewählt werden, daß die Umsetzung mit dem mindestens eine funktionelle Gruppe aufweisenden Polymer in homogener Phase ablaufen kann.

Verbindungen der allgemeinen Struktur (X) 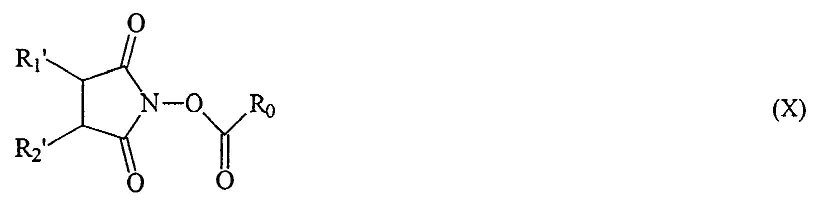 sind dadurch gekennzeichnet, daß R₀ für ein Halogenatom oder einen Rest (X') 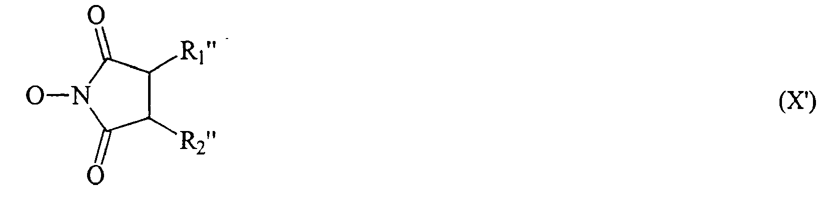 steht und R₁', R₂'; R₁" und R₂" gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁' und R₂' oder R₁" und R₂" oder sowohl R₁' und R₂' als auch R₁" und R₂" zu mindestens einem Carbocyclus oder zu mindestens einem Heterocyclus oder zu mindestens einem Carbozyklus und zu mindestens einem Heterozyklus verknüpft sind, wobei Verbindungen der folgenden Strukturen (X₁) bis (X₇) ausgeschlossen sind:

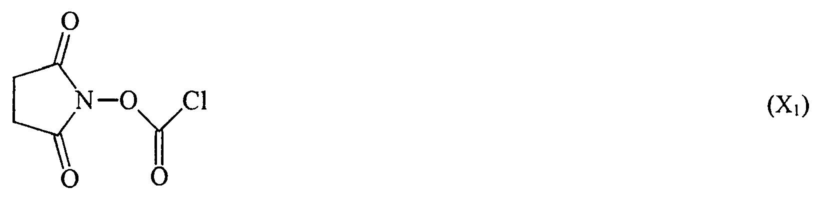

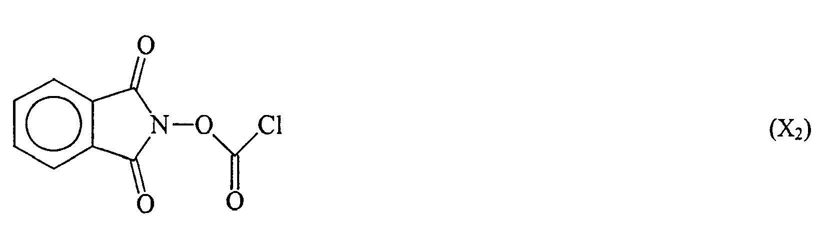

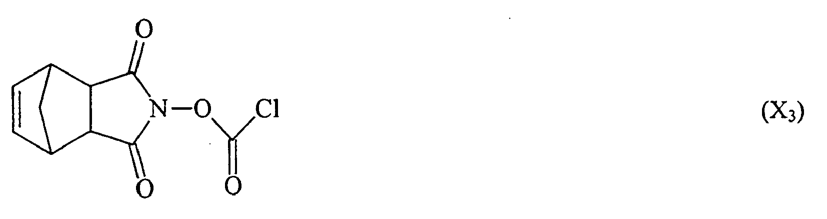

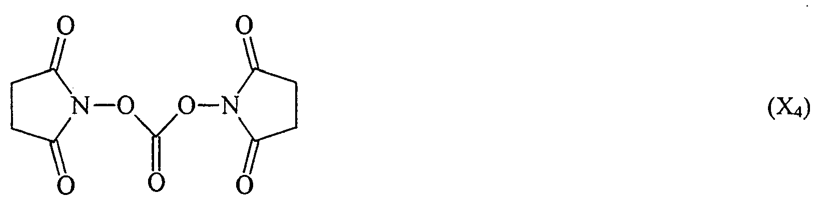

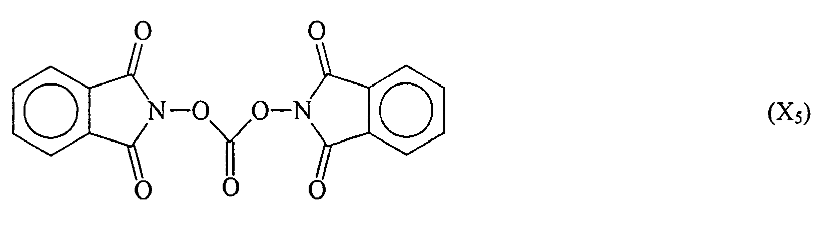

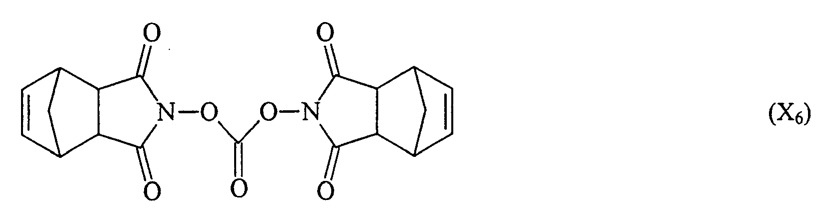

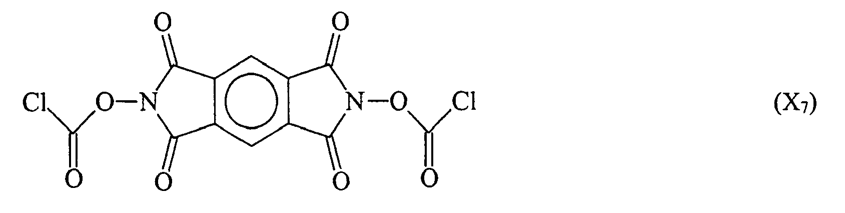

Weiterhin wird auch eine Verbindung vorgestellt, wie vorstehend beschrieben, die dadurch gekennzeichnet ist, daß sie ausgewählt wird aus der Gruppe bestehend aus den Verbindungen umfassend die folgenden Strukturen (X₈) bis (X₃₉): 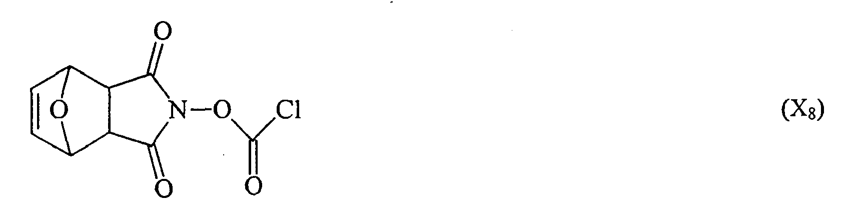 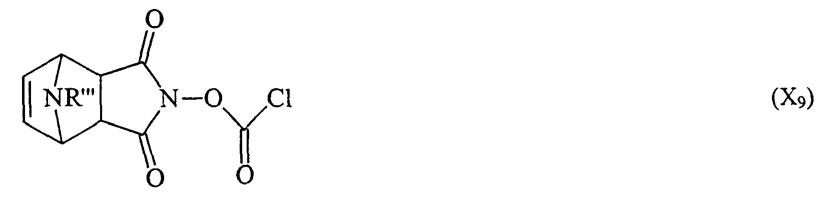 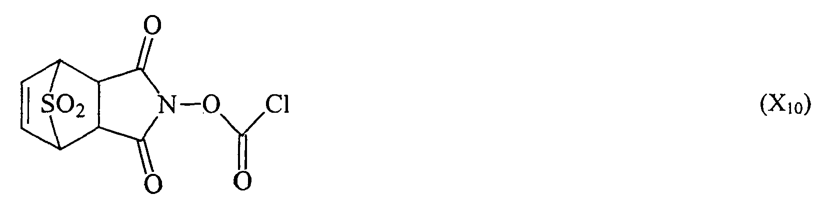 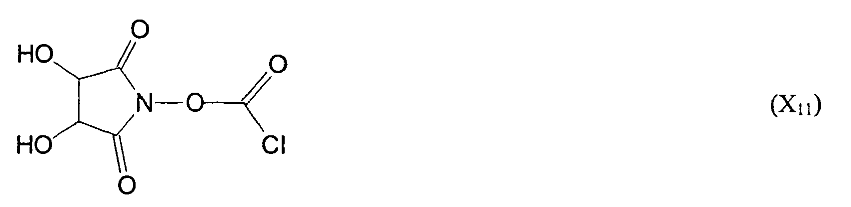 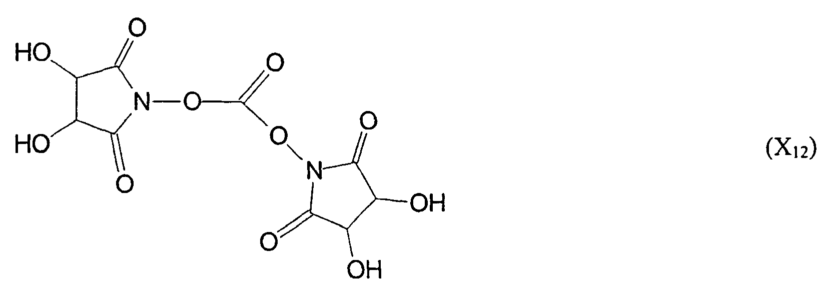 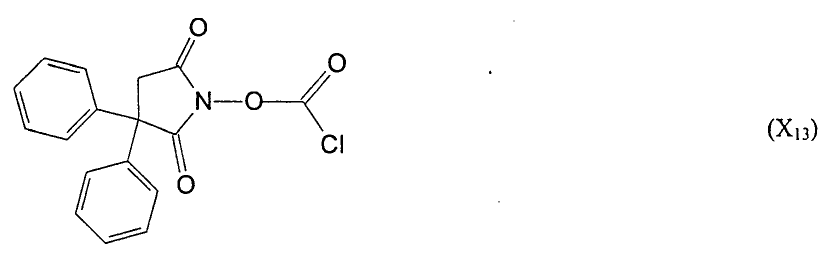 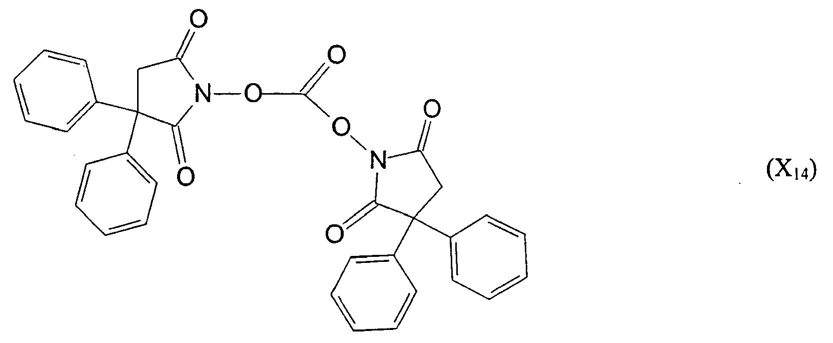 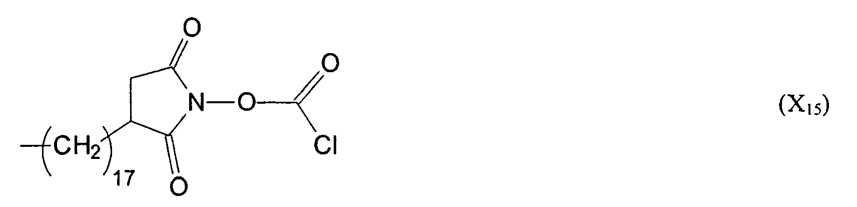 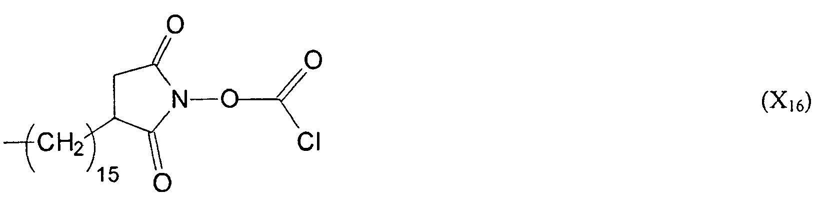 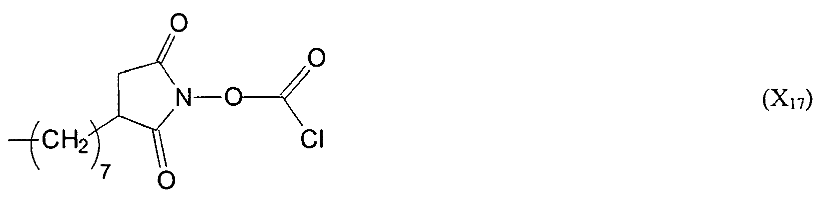 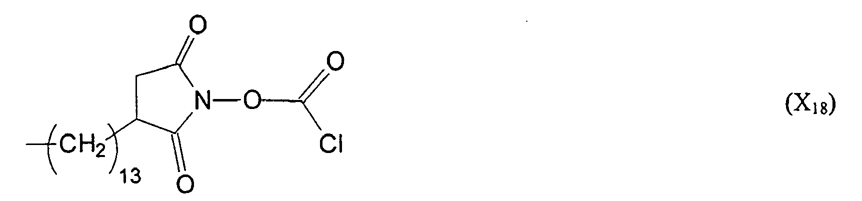 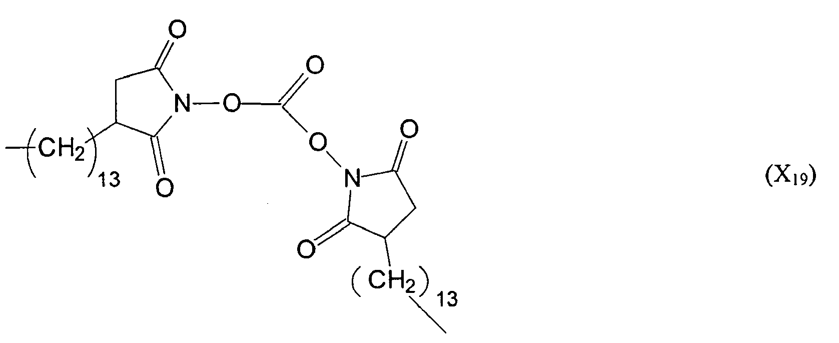 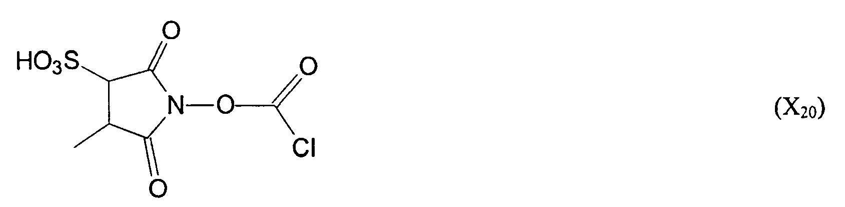 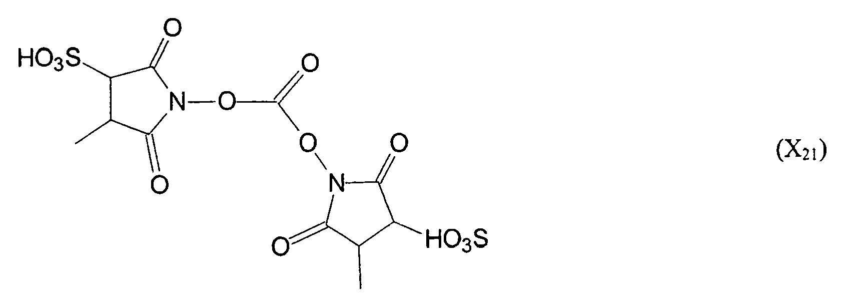 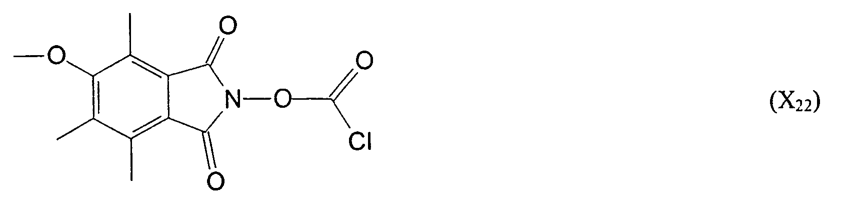 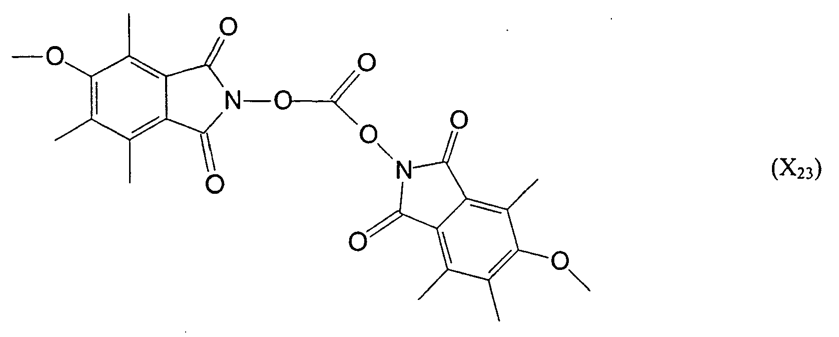 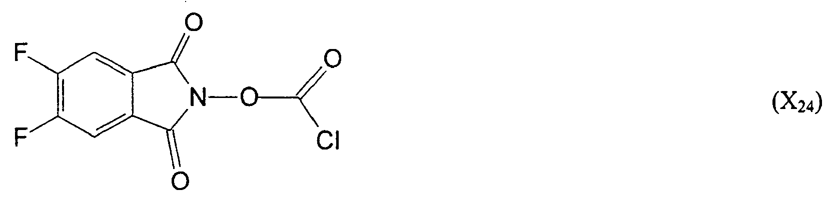 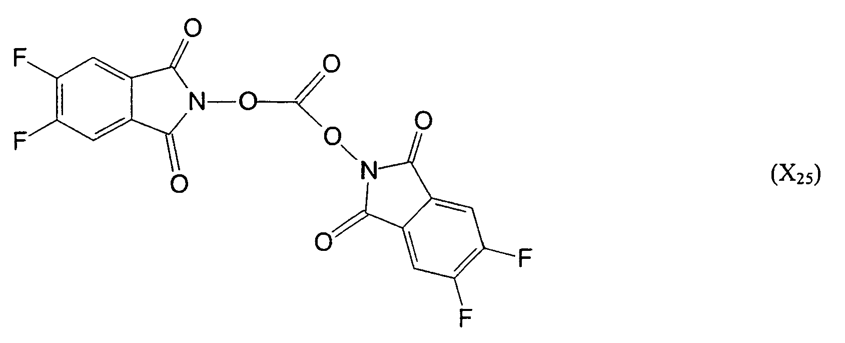 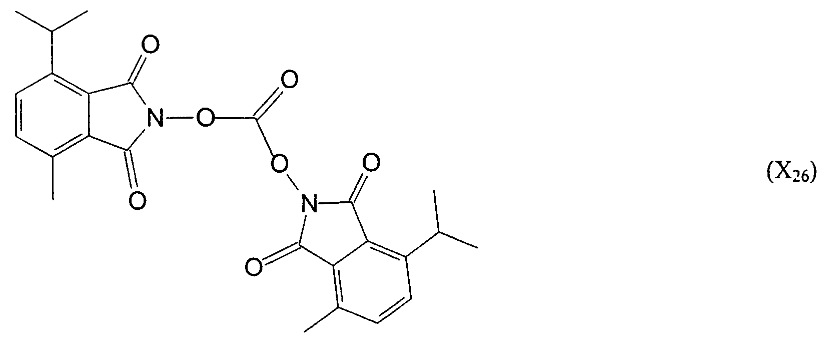 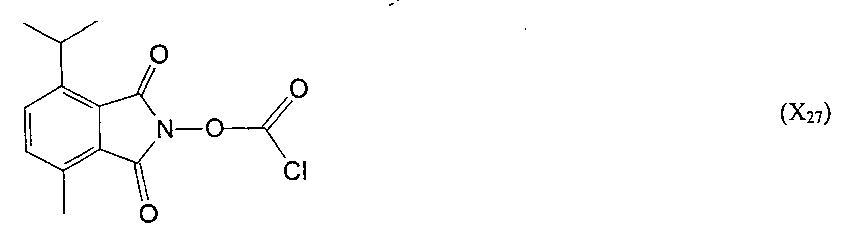 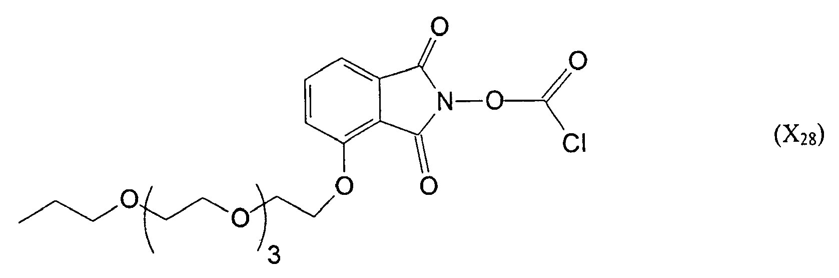 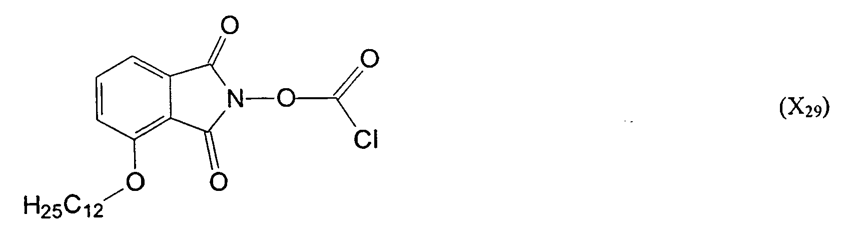 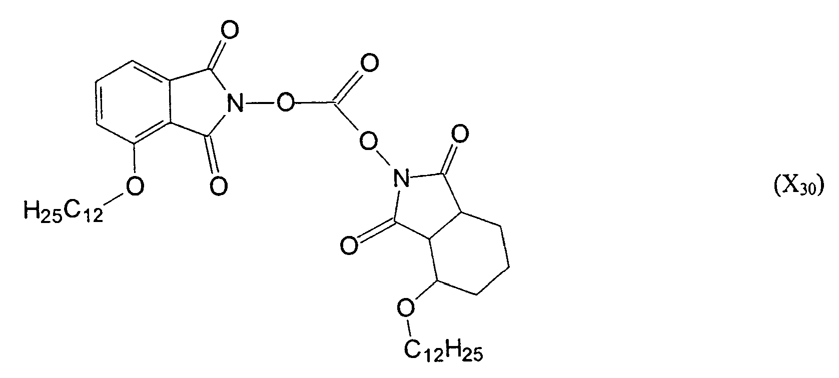 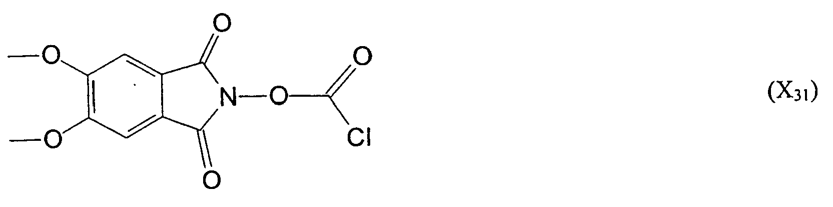 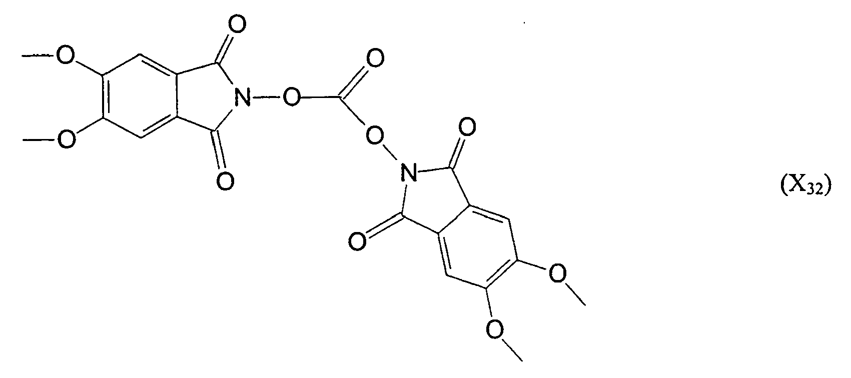 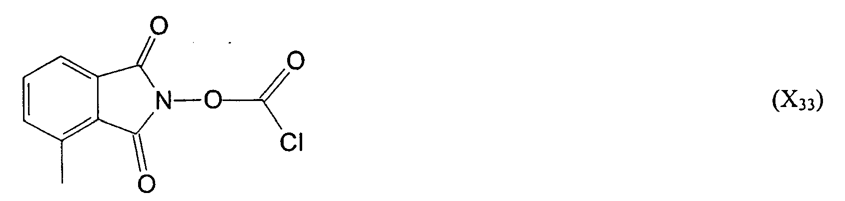 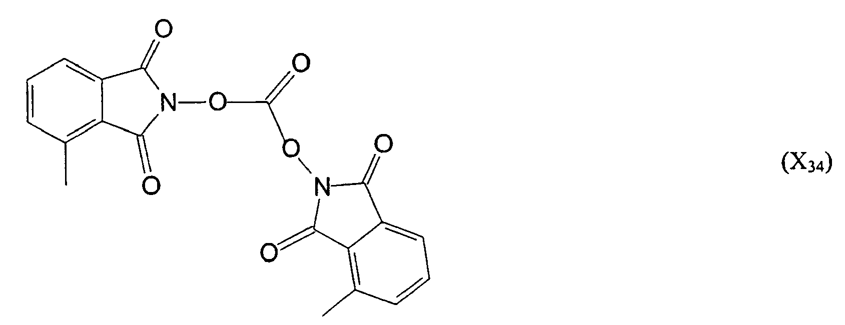 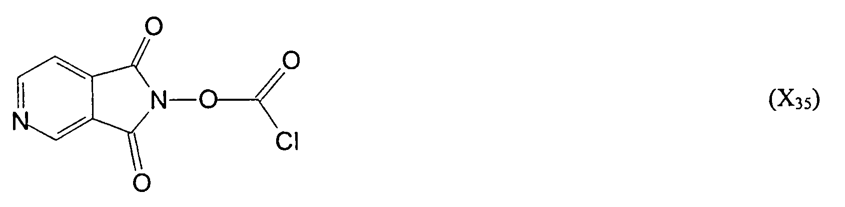 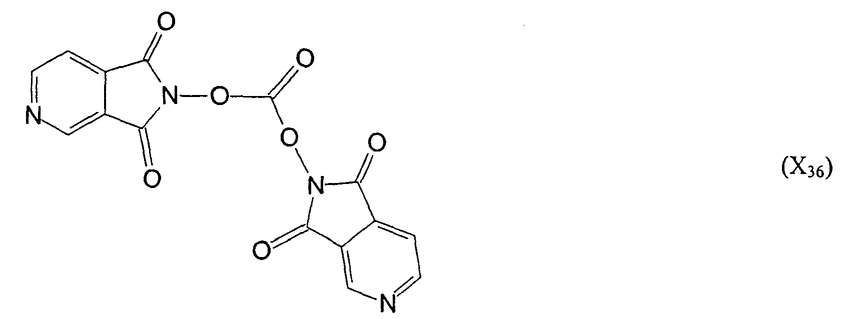 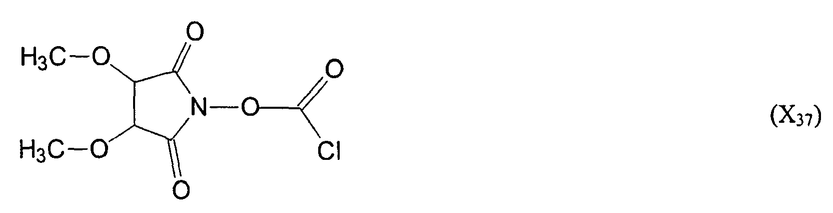 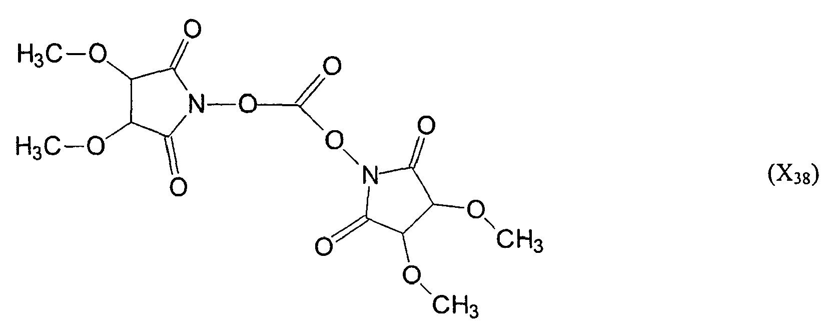 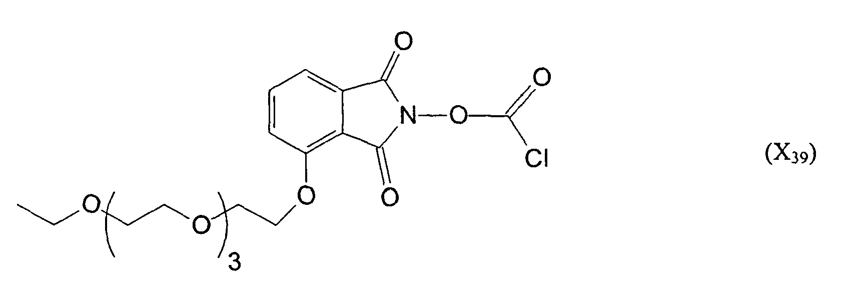 wobei R''' für Wasserstoff oder für einen geradkettigen oder verzweigtkettigen, gegebenenfalls substituierten Alkyl-, Aryl- oder Aralkylrest mit bis zu 30 C-Atomen steht.

Neben der oben beschriebenen Verwendung als Aktivierungsreagenzien zur Herstellung von Derivaten von funktionelle Gruppen aufweisenden Polymeren können diese Verbindungen auch ganz allgemein zur Aktivierung von funktionellen Gruppen eingesetzt werden.

Daher beschreibt die vorliegende Erfindung auch die Verwendung einer Verbindung, Verwendung einer Verbindung der allgemeinen Struktur (X) 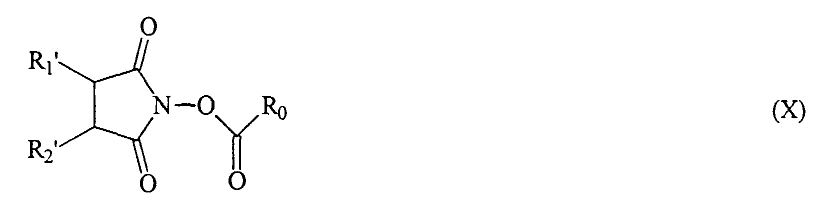 dadurch gekennzeichnet, daß R₀ für ein Halogenatom oder einen Rest der Struktur (X') 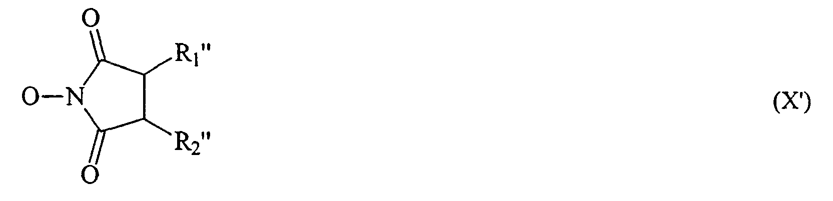 steht und R₁', R₂', R₁" und R₂" gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁' und R₂' oder R₁" und R₂" oder sowohl R₁' und R₂' als auch R₁" und R₂" zu mindestens einem Carbocyclus oder zu mindestens einem Heterocyclus oder zu mindestens einem Carbocyclus und zu mindestens einem Heterocyclus verknüpft sind, zur Aktivierung mindestens einer funktionellen Gruppe mindestens einer weiteren Verbindung.

Im folgenden wird die Erfindung anhand einiger Beispiele näher erläutert.

### Beispiele

### Beispiel 1: Herstellung von Poly(benzyl-N-vinylcarbamat) mit DS = 20 (20%ige Umsetzung der potentiellen Hydroxyl-Gruppen)

3,36 g (50 mmol) Polyvinylalkohol (45% hydrolysiert, noch 55% Acetatgruppen vorhanden) wurden in einem Erlenmeyerkolben unter Rühren in 250 ml DMSO gelöst. Zu dieser Lösung wurden 1,02 g (10 mmol) Triethylamin und 0,61 g (5 mmol) *N,N*-4-Dimethylaminopyridin gegeben. Anschließend wurde eine Lösung von 3,12 g (10 mmol) N-(Benzylaminocarbonyloxy)-5-norbornen-2,3-dicarboximid in 50 ml DMSO langsam zugetropft. Es trat kein Niederschlag auf und die Reaktionsmischung wurde für 60 h bei 20 °C gerührt.

Anschließend wurden 250 ml destilliertes Wasser zu der Reaktionsmischung gegeben, wobei eine Trübung der Lösung auftrat. Nach Zugabe von 500 ml 5 gew.-%iger wäßriger Natriumhydrogencarbonatlösung fielen kleine weiße Klumpen aus. Der Niederschlag wurde nach 2 h über einen Membranfilter abgesaugt und mit 100 ml 5 gew.-%iger wäßriger Natriumhydrogencarbonatlösung und 250 ml destilliertem Wasser gewaschen. Der Rückstand wurde im Vakuumtrockenschrank bei 50 °C für 18 h vorgetrocknet und anschließend an der Hochvakuumpumpe für weitere 50 h getrocknet. Die Ausbeute betrug 3,6 g was einer Ausbeute von 80% entspricht.

### Beispiel 2: Herstellung von Poly(menthyl-N-vinylcarbamat), mit DS = 40 (40%ige Umsetzung der NH₂-Gruppen)

3,44 g (80 mmol) eines neutral gefällten Polyvinylamins (mittlere Molmasse 10.000 g/mol) wurden in einem Schlifferlenmeyer vorgelegt und in 200 ml destilliertem Wasser gelöst. Zu der klaren Polymerlösung wurden 4,43 ml Triethylamin und 195,4 mg (1,6 mmol) Dimethylaminopyridin (DMAP) gegeben. Bei Raumtemperatur wurde 10 min nachgerührt.

Anschließend wurden 11,52 g (32 mmol) N-(Menthyloxycarbonyloxy)-S-norbornen-2,3-dicarboximid (Men-ONB), gelöst in 200 ml DMSO, zu dieser Lösung langsam zugetropft.

Nach wenigen Tropfen Zugabe fiel das Men-ONB wieder aus. Nach kompletter Zugabe entstand eine dickliche Suspension, die 2 h nachgerührt wurde. Anschließend wurde die Suspension mit 100 ml Aceton versetzt. Die Suspension klärte sich zu einer leicht getrübten Lösung auf. Diese wurde 72 h bei 20 °C nachgerührt.

Der Ansatz wurde in einen 2 1-Rundkolben überführt und das Aceton abgedampft. Nach Entfernung des Acetons trübte sich die Lösung stark ein.

Das DMSO/Wasser-Gemisch wurde mit 150 ml einer 5 gew.-%igen wäßrigen Natriumhydrogencarbonatlösung versetzt, wobei sich ein Niederschlag bildete. Der Ansatz wurde 2 h nachgerührt und anschließend über einen Faltenfilter filtriert. Der weiße voluminöse Niederschlag wurde mit 300 ml Wasser und 300 ml Aceton gewaschen und 16 h bei 35 °C im Vakuumtrockenschrank getrocknet.

Es wurden 3,92 g (42 %) eines hellbraunen Feststoffes erhalten.

### Beispiel 3: Herstellung von Poly-(benzyl-N-allylcarbamat) mit einem Derivatisierungsgrad von 7%

12,56 g (135 mmol) Poly-(allylamin Hydrochlorid) wurden in 250 ml Wasser gelöst und der pH-Wert mit 10%iger wäßriger NaHCO₃-Lösung auf 5 eingestellt. Bei 20 °C wurde eine Lösung von 2,96 g (9,45 mmol) *N*-(Benzyloxycarbonyloxy)-5-norbornen-2,3-dicarboximid in 45 ml DMSO innerhalb 30 min zugetropft. Das Reaktionsgemisch wurde anschließend bei 20 °C für 24 h gerührt. Der pH wurde während der Reaktionszeit durch Zugabe von 10%iger wäßriger NaHCO₃-Lösung auf einem Wert von 5 gehalten. Zu der klaren Reaktionsmischung wurden 200 ml 10%ige wäßrige NaHCO₃-Lösung gegeben. Danach wurde die Reaktionsmischung tropfenweise in 1000 ml Methanol eingetragen. Das quantitativ ausgefallene derivatisierte Polymer wurde über einen Cellulosenitratfilter (8 µm) abfiltriert und im Hochvakuum 24 h getrocknet. Mittels ¹H-NMR-Spektroskopie wurde der Derivatisierungsgrad von 7% bestätigt.

### Beispiel 4: Herstellung von Poly-(benzyl-N-allylcarbamat) mit einem Derivatisierungsgrad von 14%

12,56 g (135 mmol) Poly-(allylamin Hydrochlorid) wurden in 250 ml Wasser gelöst und der pH-Wert mit 10%iger wäßriger NaHCO₃-Lösung auf 5 eingestellt. Bei 20 °C wurde eine Lösung von 5,92 g (18,9 mmol) *N*-(Benzyloxycarbonyloxy)-5-norbornen-2,3-dicarboximid in 55 ml DMSO innerhalb 30 min zugetropft. Das Reaktionsgemisch wurde anschließend bei 20 °C für 24 h gerührt. Der pH wurde während der Reaktionszeit durch Zugabe von 10%iger wäßriger NaHCO₃-Lösung auf einem Wert von 5 gehalten. Die Reaktionsmischung wurde in 600 ml 10%ige wäßrige NaHCO₃-Lösung getropft. Das dabei quantitativ ausgefallene derivatisierte Polymer wurde über einen Cellulosenitratfilter (8 µm) abfiltriert und im Hochvakuum 24 h getrocknet. Mittels ¹H-NMR-Spektroskopie wurde der Derivatisierungsgrad von 14% bestätigt.

### Beispiel 5: Herstellung von Poly-(benzyl-N-allylcarbamat) mit einem Derivatisierungsgrad von 20%

13,95 g (150 mmol) Poly-(allylamin Hydrochlorid) wurden in 200 ml Wasser gelöst und der pH-Wert mit 10%iger wäßriger NaHCO₃-Lösung auf 5 eingestellt. Bei 20 °C wurde eine Lösung von 9,39 g (30 mmol) *N*-(Benzyloxycarbonyloxy)-5-norbornen-2,3-dicarboximid in 50 ml DMSO innerhalb 30 min zugetropft. Das Reaktionsgemisch wurde anschließend bei 20 °C für 24 h gerührt. Der pH wurde während der Reaktionszeit durch Zugabe von 10%iger wäßriger NaHCO₃-Lösung auf einem Wert von 5 gehalten. Die Reaktionsmischung wurde in 500 ml 10%ige wäßrige NaHCO₃-Lösung getropft. Das dabei quantitativ ausgefallene derivatisierte Polymer wurde über einen Cellulosenitratfilter (8 µm) abfiltriert, mit Wasser nachgewaschen und im Hochvakuum 24 h getrocknet. Mittels ¹H-NMR-Spektroskopie wurde der Derivatisierungsgrad von 20% bestätigt.

### Beispiel 6: Herstellung von Poly-(6-(allylamino)-6-oxohexansäure) mit einem Derivatisierungsgrad von 7%

5,00 g (54 mmol) Poly-(allylamin Hydrochlorid) wurden in 500 ml Wasser gelöst und der pH-Wert der Lösung mit 10%iger NaHCO₃-Lösung auf den Wert 5 eingestellt. Bei 20 °C wurde eine Lösung von 1,2 g (4 mmol) 1-Adipinsäure-(*N*-hydroxy-5-norbornen-2,3-dicarboximid)ester in 100 ml DMSO innerhalb 30 min zugetropft. Das Reaktionsgemisch wurde anschließend bei 20 °C für 24 h gerührt. Zu der klaren Reaktionsmischung wurden 500 ml 10%ige wäßrige NaHCO₃-Lösung sowie 1000 ml Methanol gegeben, wobei das derivatisierte Polymer ausfiel. Das Lösungsmittel wurde abdekantiert und das Polymer im Hochvakuum 24 h getrocknet.

### Beispiel 7: Herstellung von Poly-(2-(2-oxo-1-imidazolidinyl)ethyl-N-allylcarbamat) mit einem Derivatisierungsgrad von DS 7%

12,46 g (134 mmol) Poly-(allylamin Hydrochlorid) wurden in 250 ml Wasser gelöst und der pH-Wert der Lösung mit 10%iger NaHCO₃-Lösung auf den Wert 5 eingestellt. Bei 20 °C wurde eine Lösung von 3,14 g (9,4 mmol) der Verbindung der folgenden Struktur 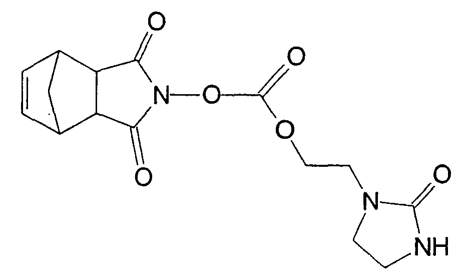 in 50 ml DMSO innerhalb 30 min zugetropft. Das Reaktionsgemisch wurde anschließend bei 20 °C für 48 h gerührt. Die Lösung wurde auf 100 ml eingeengt und durch Zugabe von NaHCO₃ wird der pH auf 9 eingestellt. Durch Eintropfen der Reaktionslösung in 500 ml Methanol wurde das derivatisierte Polymer ausgefällt, abfiltriert, mit Methanol gewaschen und am Hochvakuum getrocknet. Mittels ¹H-NMR-Spektroskopie wurde der Derivatisierungsgrad von 7% bestätigt.

### Beispiel 8: Herstellung von Poly-(ethylen-co-N-benzylvinylcarbamat) mit einem Derivatisierungsgrad von 8%

5,04 g (165 mmol) Poly-(ethylen-co-vinylalkohol) (Ethylengehalt: 84 mol%) wurden bei 50 °C in 200 ml Tetrahydrofuran gelöst. Nach Zugabe von 1,52 g (15 mmol) Triethylamin und 0,31 g (2,5 mmol) 4-Dimethylaminopyridin wurde innerhalb von 15 min eine Lösung von 4,12 g (13,2 mmol) der Verbindung der folgenden Struktur 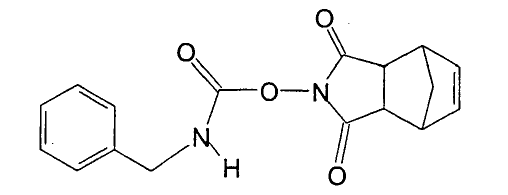 in 50 ml DMSO zugetropft. Das Reaktionsgemisch wurde anschließend bei 50 °C für 48 h gerührt. Die klare Lösung wurde in 650 ml 5%ige wäßrige NaH-CO₃-Lösung eingetragen, wobei das Polymer als leicht gelblicher Niederschlag ausfällt. Nach Filtration wurde der Niederschlag im Hochvakuum 48 h getrocknet.

### Beispiel 9: Herstellung von Menthydrazid-ONB

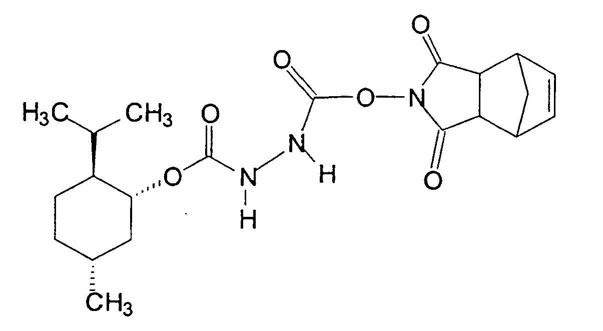

7,71 g (32 mmol) N-(Chlorcarbonyloxy)-5-norbornen-2,3-dicarboximid wurden in 350 ml Dichlormethan gelöst. Bei -15 °C wurde eine Lösung von 5,82 g (30 mmol) Menthyl-1-hydrazincarboxylat und 3,33 g (33 mmol) Triethylamin in 70 ml Dichlormethan innerhalb 1 h zugetropft. Das Gemisch wurde noch 15 min bei -15 °C gerührt und anschließend bei 0 °C mit 150 ml 10%iger KHSO₄-Lösung versetzt. Die Reaktionslösung wurde zweimal mit 150 ml 10%iger NaHCO₃-Lösung geschüttelt und die organische Phase über Na₂SO₄ getrocknet. Nach Entfernen des Lösungsmittels blieben hellgelbe amorphe Kristalle zurück, die im Hochvakuum getrocknet wurden. Ausbeute: 11,5 g (91,4 %).

### Beispiel 10: Herstellung von Poly-(ethylen-co-(1-menthyl-2-vinyl-1,2-hydrazindicarboxylat)) mit einem Derivatisierungsgrad von 28%

0,92 g (25 mmol) Poly-(ethylen-*co*-vinylalkohol) (Ethylengehalt: 44 mol%) wurden bei 50 °C in 100 ml DMSO gelöst. Nach Zugabe von 0,71 g (7 mmol) Triethylamin und 0,09 g (0,7 mmol) 4-Dimethylaminopyridin wurde innerhalb von 15 min eine Lösung von 2,93 g (7 mmol) Menthydrazid-ONB 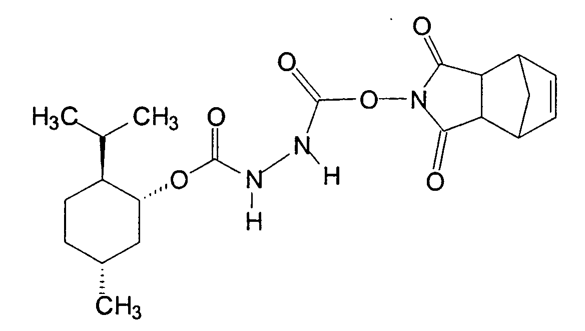 in 25 ml DMSO zugetropft. Das Reaktionsgemisch wurde anschließend bei 20 °C für 48 h gerührt. Die klare Lösung wurde mit 100 ml Wasser und 200 ml 5%iger wäßriger NaHCO₃-Lösung versetzt, wobei das Polymer als weißer Niederschlag ausfiel. Nach Filtration und Waschen mit Wasser wurde der Niederschlag im Hochvakuum 48 h getrocknet.

### Beispiel 11: Polymerverformung

### Erklärung der Verbindungen:

- Kieselgel 300 Å, 20 µm (Daisogel SP 300-15/30), belegt mit 3 Schichten Poly(benzyl-N-allylcarbamat) mit einem Derivatisierungsgrad von 7%, die zu 2% mit Dodecandisäure-bis-(N-hydroxy-5-norbornen-2,3-dicarboximid)-ester vemetzt sind = (1),
- Bernsteinsäure-bis-(N-hydroxy-5-norbornen-2,3-dicarboximid)-ester = (2)

Eine mit (1) gefüllte Säule wurde mit 0,2 %iger (10,5 nimol/L) 5-Methyl-5-phenylhydantoin Lösung (Substrat) in CHCl₃ und einem Fluß von 0,6 mL/min konditioniert, wobei ca. 40 mg des Substrats auf der Säule adsorbiert wurden. Anschließend wurden 80 µL Eisessig injiziert und der Auslauf in zwei Fraktionen aufgefangen:
1. Fraktion: Von der Injektion bis zum Wiedererreichen der Basislinie nach dem Substrat-Peak (6,1 min).
   In dieser Fraktion waren 18,2 mg Substrat enthalten. Hiervon wurde die in dieser Zeit vom Eluenten eingespülte Substratmenge von 7,32 mg abgezogen, so daß sich für die vom Eisessig ausgespülte Menge ein Wert von 10,9 mg ergab.
2. Fraktion: Vom Wiedererreichen der Basislinie nach dem Substrat-Peak bis zur erneuten Einstellung des vor der Injektion vorhandenen Gleichgewichts (6,1 bis 80 min).
   In dieser Fraktion wurden 72,2 mg Substrat gefunden. Da in dieser Zeit (73,9 min) durch den Eluenten 88,7 mg eingespült worden waren, betrug die von der stationären Phase aufgenommene Substratmenge 16,5 mg.

Nach Beendigung der Injektion wurde die Säule ausgebaut und auf 0°C gekühlt (ca. 30 min).

Zur Herstellung einer Vemetzerlösung wurde (2) (186,2 mg, 0,423 mmol) in 19,24 mL 0,2%iger (10,5 mmol/L) 5-Methyl-5-phenylhydantoinlösung aufgelöst und Triethylamin (0,76 mL) zugeben. Aus einem auf 0°C gekühltem Vorratsgefäß wurde diese Lösung in das System (ohne Säule) eingespült.

Nach Basislinienkonstanz wurde die Säule wieder in das System eingebaut, so daß sie dabei weiterhin auf 0°C gekühlt blieb. Die Vemetzerlösung wurde mit 5 mL/min in die Säule eingespült. Nach dem Durchbruch der Vernetzerfront (UV 265 nm) wurde der Fluß abgestellt.

Die Säule wurde wieder ausgebaut, 30 min weiterhin auf 0°C gekühlt und anschließend in einen Säulenthermostat (120 min, 25°C) gelegt.

Das System (ohne Säule) wurde mit Tetrahydrofuran gespült, die Säule nach 120 min Reaktionszeit wieder in das System eingebaut und mit 50 mL Tetrahydrofuran gespült (1 mL/min).

Zum Deaktivieren der noch verbliebenen freien (N-Oxy-5-norbomen-2,3-dicarboximid)-Gruppen des Vernetzers wurde Diethylamin (40,2 mg, 0,55 mmol) (5 Äquivalente bezogen auf maximal entstehendes N-Hydroxy-5-norbomen-2,3-dicarboximid) in Tetrahydrofuran (20 mL) gelöst (Quenchlösung), in die Säule eingespült (1 mL/min), die Lösung aus dem Säulenauslauf 5 h wieder in die Säule eingespült und dann auf Tetrahydrofuran umgeschaltet. Nach Basislinienkonstanz wurde die Pumpe angehalten, der Säulenthermostat auf 50°C gestellt und für 30 min diese Temperatur gehalten. Anschließend wurde das Tetrahydrofuran mit 1 mL/min weiter gepumpt, bis reines Tetrahydrofuran eluiert wurde.

## Patentansprüche

1. Verfahren zur Herstellung eines Derivates eines mindestens eine funktionelle Gruppe aufweisenden Polymers, **dadurch gekennzeichnet, dass** das Verfahren die folgenden Schritte (i) oder (ii) umfasst:
(i) Umsetzung des mindestens eine funktionelle Gruppe aufweisenden Polymers mit mindestens einem Aktivierungsreagens und Umsetzung des erhaltenen Polymers mit einem Derivatisierungsreagens, wobei das Aktivierungsreagens mit der funktionellen Gruppe unter Bildung eines Polymers reagiert, das eine aktivierte funktionelle Gruppe besitzt, und Umsetzung der aktivierten funktionellen Gruppe des Polymers mit einem Derivatisierungsreagens unter Bildung des derivatisierten Polymers,
(ii) Umsetzung des mindestens eine funktionelle Gruppe aufweisenden Polymers mit mindestens einem Derivat eines Aktivierungsreagens, wobei das Derivat des Aktivierungsreagens mit der funktionellen Gruppe unter Bildung des derivatisierten Polymers reagiert,
wobei die Umsetzungen in (i) und (ii) in homogener Phase durchgeführt werden, und
sich das Aktivierungsreagens von einer Verbindung der folgenden Struktur (I) ableitet, 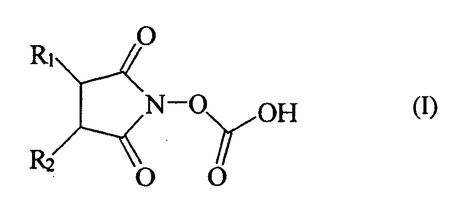 wobei R₁ und R₂ gleich oder unterschiedlich sind und geradkettig, verzweigt-kettig oder zu einem Carbozyklus oder einem Heterozyklus verbrückt sein können und so gewählt sind, daß das Aktivierungsreagens oder das Derivat des Aktivierungsreagens mit dem mindestens eine funktionelle Gruppe aufweisenden Polymer in homogener Phase umgesetzt werden kann.

2. Verfahren nach Anspruch 1, **dadurch gekennzeichnet, dass** das mindestens eine Derivat des Aktivierungsreagens durch vorherige Umsetzung des Aktivierungsreagens mit einem Derivatisierungsreagens erhalten wird.

3. Verfahren nach Anspruch 1 oder 2, **dadurch gekennzeichnet, dass** das Derivatisierungsreagens die Zusammensetzung HY-R₁₂ aufweist, wobei Y die Gruppen O, NH, NR₁₃ oder S umfaßt, und R₁₂ und R₁₃ beliebige Reste sind.

4. Verfahren nach einem der Ansprüche 1 bis 3, **dadurch gekennzeichnet, dass** die funktionelle Gruppe des mindestens eine funktionelle Gruppe aufweisenden Polymers eine OH-Gruppe, eine NHR₁₁-Gruppe, eine SH-Gruppe, eine OSO₃H-Gruppe, eine SO₃H-Gruppe, eine OPO₃H₂-Gruppe, eine OPO₃HR₁₁-Gruppe, eine PO₃H₂-Gruppe, eine PO₃HR₁₁-Gruppe oder eine COOH-Gruppe und R₁₁ jeweils so gewählt ist, daß das Aktivierungsreagens oder das Derivat des Aktivierungsreagens mit dem mindestens eine funktionelle Gruppe aufweisenden Polymer in homogener Phase umgesetzt werden kann.

5. Derivat eines mindestens drei funktionelle Gruppen aufweisenden Polymers herstellbar nach einem Verfahren gemäß einem der Ansprüche 1 bis 4, wobei mindestens zwei der funktionellen Gruppen derivatisiert sind, und mindestens eine funktionelle Gruppe und/oder eine Monomereinheit ohne funktionelle Gruppe zwischen zwei dieser derivatisierten Gruppen liegt.

6. Derivat eines mindestens eine funktionelle Gruppe aufweisenden Polymers herstellbar nach einem Verfahren gemäß einem der Ansprüche 1 bis 4, **dadurch gekennzeichnet, daß** es chemische Substanzen über nicht-kovalente Wechselwirkung bindet, wobei die Bindung über mindestens zwei verschiedene Arten von Wechselwirkungen ausgewählt aus der Gruppe umfassend Wasserstoffbrückenbindungen, Dipol-Dipol-Wechselwirkungen, Van der Waals-Wechselwirkungen, Hydrophobe Wechselwirkungen, Charge-Transfer-Wechselwirkungen, Ionische Wechselwirkungen, Koordinative Bindungen sowie Kombinationen dieser Wechselwirkungen erfolgt.

7. Verfahren zur Bindung mindestens einer chemischen Substanz an mindestens ein Derivat eines Polymeren, **dadurch gekennzeichnet, dass** die Bindung über nicht-kovalente Wechselwirkung erfolgt, wobei das Derivat des Polymer nach einem Verfahren gemäß einem der Ansprüche 1 bis 4 hergestellt wird, oder ein Derivat gemäß einem der Ansprüche 5 bis 6 ist.

8. Verwendung eines Derivats eines mindestens eine funktionelle Gruppe aufweisenden Polymers hergestellt nach einem Verfahren gemäß einem der Ansprüche 1 bis 4 oder eines Derivats gemäß einem der Ansprüche 5 bis 6 zur selektiven oder spezifischen Bindung von chemischen Substanzen.

## Claims

1. Process for the preparation of a derivative of a polymer having at least one functional group, **characterized in that** the process comprises the following steps (i) or (ii):
(i) reaction of the polymer having at least one functional group with at least one activating reagent, and reaction of the obtained polymer with a derivatizing reagent, where the activating reagent reacts with the functional group to give a polymer having an activated functional group, and reaction of the activated functional group of the polymer with a derivatizing reagent to give the derivatized polymer,
(ii) reaction of the polymer having at least one functional group with at least one derivative of an activating reagent, where the derivative of the activating reagent reacts with the functional group to give the derivatized polymer,
wherein the reactions in (i) and (ii) are carried out in homogeneous phase, and where the activating reagent is derived from a compound of the following structure (I) 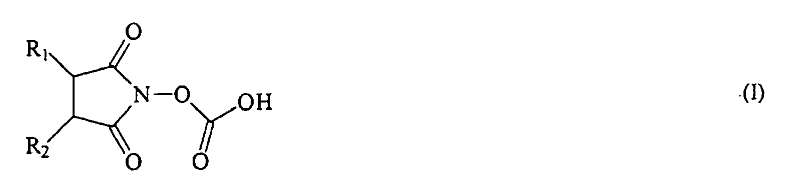 where R₁ and R₂ are identical or different and can be straight-chain, branched-chain or bridged to give a carbocycle or a heterocycle, and are selected such that the activating reagent or the derivative of the activating reagent can be reacted with the polymer having at least one functional group in homogeneous phase.

2. Process as claimed in claim 2, **characterized in that** the at least one derivative of the activating reagent is obtained by the prior reaction of the activating reagent with a derivatizing reagent.

3. Process as claimed in claim 2 or 3, **characterized in that** the derivatizing agent has the general composition HY-R₁₂, where Y comprises the groups O, NH, NR₁₃ or S, where R₁₂ and R₁₃ can be freely selected.

4. Process as claimed in any one of claims 1 to 3, **characterized in that** the functional group of the polymer having at least one functional group is a OH group, a NHR₁₁ group, a SH group, a OSO₃H group, a SO₃H group, a OPO₃H₂ group, a OPO₃HR₁₁ group, a PO₃H₂ group, a PO₃HR₁₁ group, or a COOH group, and R₁₁ is selected in each case such that the activating reagent or the derivative of the activating reagent can be reacted in homogeneous phase with the polymer having at least one functional group.

5. Derivative of a polymer having at least three functional groups obtainable by a process as defined in any one of claims 1 to 4, where at least two of the functional groups are derivatized, and at least one functional group and/or a monomer unit without a functional group lies between two of these derivatized groups.

6. Derivative of a polymer having at least one functional group obtainable by a process as defined in any one of claims 1 to 4, **characterized in that** it binds chemical substances via non-covalent interaction, where the binding takes place via at least two different types of interactions selected from the group comprising hydrogen bonds, dipole-dipole interactions, Van der Waals interactions, hydrophobic interactions, charge-transfer interactions, ionic interactions, coordinative bonds as well as combinations of these interactions.

7. Process for the binding of at least one chemical substance to at least one derivative of a polymer, **characterized in that** the binding takes place via non-covalent interactions, where the derivative of the polymer is prepared via a process as claimed in any one of claims 1 to 4, or where the derivative is a derivative as claimed in any one of claims 5 to 6.

8. Use of a derivative of a polymer having at least one functional group as claimed in any one of claims 1 to 4, or a derivative as claimed in any one of claims 5 to 6, for the selective binding or specific binding of chemical substances.

## Revendications

1. Procédé de préparation d'un dérivé d'un polymère comportant au moins un groupe fonctionnel, **caractérisé en ce que** le procédé comprend les étapes (i) ou (ii) suivantes :
(i) transformation du polymère comportant au moins un groupe fonctionnel avec au moins un réactif activateur et transformation du polymère obtenu avec un réactif de dérivation, le réactif activateur réagissant avec le groupe fonctionnel pour former un polymère qui possède un groupe fonctionnel activé, et transformation du groupe fonctionnel activé avec un agent de dérivation pour former le polymère dérivé,
(ii) transformation du polymère comportant au moins un groupe fonctionnel avec au moins un dérivé d'un réactif activateur, dans laquelle le dérivé du réactif activateur réagit avec le groupe fonctionnel pour former le polymère dérivé,
les transformations en (i) et en (ii) étant effectuées en phase homogène, et
le réactif activateur étant dérivé d'un composé de la structure suivante (I), 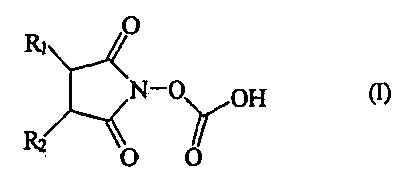 dans laquelle R₁ et R₂ sont identiques ou différents et peuvent être à chaîne linéaire, à chaîne ramifiée ou être réticulés en un cycle carboné ou en un hétérocycle, et sont choisis de telle sorte que le réactif d'activation ou le dérivé du réactif d'activation puisse réagir en phase homogène avec le polymère comportant au moins un groupe fonctionnel.

2. Procédé selon la revendication 1, **caractérisé en ce qu'**au moins un dérivé du réactif d'activation est obtenu par réaction préalable du réactif d'activation avec un réactif de dérivation.

3. Procédé selon la revendication 1 ou 2, **caractérisé en ce que** le réactif de dérivation présente la composition HY-R₁₂, dans laquelle Y comprend les groupes O, NH, NR₁₃ ou S, et R₁₂ et R₁₃ sont des restes quelconques.

4. Procédé selon l'une des revendications 1 à 3, **caractérisé en ce que** le groupe fonctionnel du polymère comportant au moins un groupe fonctionnel est un groupe OH, un groupe NHR₁₁, un groupe SH, un groupe OSO₃H, un groupe SO₃H, un groupe OPO₃H₂, un groupe OPO₃HR₁₁, un groupe PO₃H₂, un groupe PO₃HR₁₁ ou un groupe COOH, et **en ce que** R₁₁ est choisi de telle sorte que le réactif d'activation ou le dérivé du réactif d'activation puisse réagir en phase homogène avec le polymère comportant au moins un groupe fonctionnel.

5. Dérivé d'un polymère comportant au moins trois groupes fonctionnels, pouvant être préparé selon un procédé selon l'une des revendications 1 à 4, dans lequel au moins deux des groupes fonctionnels sont dérivés, et au moins un groupe fonctionnel et/ou une unité monomère sans groupe fonctionnel se trouve entre deux de ces groupes dérivés.

6. Dérivé d'un polymère comportant au moins un groupe fonctionnel, pouvant être préparé d'après un procédé selon l'une des revendications 1 à 4, **caractérisé en ce qu'**il lie des substances chimiques par des interactions non covalentes, sachant que la liaison s'effectue par au moins deux types différents d'interactions, choisies parmi le groupe comprenant les liaisons par ponts hydrogène, les interactions dipôle-dipôle, les interactions de Van der Waals, les interactions hydrophobes, les interactions de transfert de charge, les interactions ioniques, les liaisons de coordination, ainsi que des combinaisons de ces interactions.

7. Procédé de liaison d'au moins une substance chimique à au moins un dérivé d'un polymère, **caractérisé en ce que** la liaison s'effectue par des interactions non covalentes, le dérivé du polymère étant préparé selon l'une des revendications 1 à 4, ou étant un dérivé selon l'une des revendications 5 à 6.

8. Utilisation d'un dérivé d'un polymère comportant au moins un groupe fonctionnel, préparé d'après un procédé selon l'une des revendications 1 à 4, ou d'un dérivé selon l'une des revendications 5 à 6 pour la liaison sélective ou spécifique de substances chimiques.
